(19) Europäisches Patentamt
European Patent Office
Office européen des brevets

(11) **EP 4 617 909 A1**

(12) **EUROPEAN PATENT APPLICATION**
published in accordance with Art. 153(4) EPC

(43) Date of publication:
**17.09.2025 Bulletin 2025/38**

(21) Application number: **23896806.9**

(22) Date of filing: **29.11.2023**

(51) International Patent Classification (IPC):
***G06F 16/34*** *(2025.01)*

(52) Cooperative Patent Classification (CPC):
**G06F 16/34**

(86) International application number:
**PCT/CN2023/134903**

(87) International publication number:
**WO 2024/114659 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 CN 202211534548**

(71) Applicant: **Huawei Technologies Co., Ltd.
Shenzhen, Guangdong 518129 (CN)**

(72) Inventors:
• **JIE, Renlong
Shenzhen, Guangdong 518129 (CN)**

• **MENG, Xiaojun
Shenzhen, Guangdong 518129 (CN)**
• **JIANG, Xin
Shenzhen, Guangdong 518129 (CN)**
• **LIU, Qun
Shenzhen, Guangdong 518129 (CN)**
• **QIAN, Li
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **SUMMARY GENERATION METHOD AND RELATED DEVICE**

(57)     This application discloses a summary generation method and a related device thereof, to automatically generate a summary that is of a target text and that meets a length limit. In addition, the generated summary of the target text is usually a summary with high quality, and can meet a reading requirement of a user, to improve user experience. The method in this application includes: obtaining a target text, where the target text includes N sentences, and N≥2; scoring the N sentences by using an extractive summarization model, to obtain scores of the N sentences, where the scores of the N sentences indicate profits of the N sentences in the target text; determining, from the N sentences based on the scores of the N sentences and lengths of the N sentences, M sentences whose score sum is largest and whose length sum is less than a length threshold, where N≥M≥1, and generating a summary of the target text based on the M sentences. In addition, this application further provides a differentiable summary length control module, and the module may implement end-to-end model training in combination with to a to-be-trained extractive summarization model.

FIG. 4

Obtain a target text, where the target text includes N sentences, and N≥2 — 401

Score the N sentences by using a first model, to obtain scores of the N sentences, where the scores of the N sentences indicate profits of the N sentences in the target text — 402

Determine, from the N sentences based on the scores of the N sentences and lengths of the N sentences, M sentences whose score sum is largest and whose length sum is less than a length threshold, where N≥M≥1 — 403

Generate a summary of the target text based on the M sentences — 404

EP 4 617 909 A1

**Description**

This application claims priority to Chinese Patent Application No. 202211534548.5, filed with the China National Intellectual Property Administration on November 29, 2022, and entitled "SUMMARY GENERATION METHOD AND RELATED DEVICE THEREOF", which is incorporated herein by reference in its entirety.

**TECHNICAL FIELD**

Embodiments of this application relate to the field of artificial intelligence (artificial intelligence, AI) technologies, and in particular, to a summary generation method and a related device thereof.

**BACKGROUND**

In an automatic summarization technology, a computer is used to automatically implement text analysis and content induction to automatically generate a summary, that is, express main content of a text in a concise form based on a user requirement. The automatic summarization technology can effectively help a user find content that the user is interested in from a retrieved article, to improve a reading speed and quality.

Currently, a neural network model in an AI technology may be used to process the text, to extract the summary of the text. Specifically, the neural network model may first map a plurality of sentences of the text, to obtain representations of the plurality of sentences, and then perform multi-head attention mechanism-based processing on the representations of the plurality of sentences, to obtain scores of the plurality of sentences. These scores may indicate profits of the plurality of sentences in the text. In this way, several sentences with high scores may form the summary of the text.

However, in a process of generating the summary, only the profits of the sentences in the text are considered, and a considered factor is single. As a result, the finally generated summary of the text is not a summary with high quality, and cannot meet a reading requirement of the user. This reduces user experience.

**SUMMARY**

Embodiments of this application provide a summary generation method and a related device thereof, to automatically generate a summary that is of a target text and that meets a length limit. In addition, the generated summary of the target text is usually a summary with high quality, and can meet a reading requirement of a user, to improve user experience.

A first aspect of embodiments of this application provides a summary generation method. The method includes: When a user needs to obtain a summary of a target text, the user may input or select the target text in user equipment, so that the user equipment determines that the summary of the target text needs to be generated. The target text includes N sentences, lengths of the N sentences are known, and N is a positive integer greater than or equal to 2.

After obtaining the target text, the user equipment may input the N sentences of the target text into a first model, to score the N sentences of the target text by using the first model, to obtain scores of the N sentences of the target text. In the N sentences of the target text, the scores of the N sentences indicate profits of the N sentences in the target file.

After obtaining the scores of the N sentences of the target text, the user equipment may use the scores of the N sentences of the target text and the lengths of the N sentences of the target text as initial values of a knapsack problem, and solve the knapsack problem. An obtained solution is M sentences that are in the N sentences of the target text and whose score sum is largest and whose length sum is less than a length threshold of the summary, where M is a positive integer greater than or equal to 1, and M is less than or equal to N.

After obtaining the M sentences whose score sum is largest and whose length sum is less than the length threshold of the summary, the user equipment may form the summary of the target text by using the M sentences, and present the summary to the user for browsing and using.

It can be learned from the foregoing method that, after the target text including the N sentences is obtained, the N sentences may be scored by using the first model, to obtain the scores of the N sentences. The scores of the N sentences indicate the profits of the N sentences in the target text. Then, the M sentences whose score sum is largest and whose length sum is less than the length threshold may be selected from the N sentences based on the scores of the N sentences and the lengths of the N sentences. Finally, the selected M sentences may be used to form the summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

In a possible implementation, the determining, from the N sentences based on the scores of the N sentences and the lengths of the N sentences, the M sentences whose scores have the largest sum and whose lengths have the sum less than the summary length includes: computing the scores of the N sentences and the lengths of the N sentences by using an objective algorithm, to determine, from the N sentences, the M sentences whose score sum is largest and whose length sum is less than the length threshold. In the foregoing implementation, the user equipment may obtain the objective algorithm, use the scores of the N sentences of the target text and the lengths of the N sentences of the target text as the initial values of the objective algorithm, and use, as an optimization objective of the objective algorithm, the largest sum of the scores and the sum of the lengths less than the length threshold of the summary. Then, the user equipment may run the objective algorithm, to perform optimization computation on the scores of the N sentences of the target text and the lengths of the N sentences of the target text by using the objective algorithm, so as to obtain, from the N sentences of the target text, the M sentences whose score sum is largest and whose length sum is less than the length threshold of the summary.

In a possible implementation, the objective algorithm is any one of the following: a dynamic programming algorithm, a backtracking method, a branch and bound method, and a greedy algorithm. The greedy algorithm is any one of the following: a profit density greedy algorithm, a profit greedy algorithm, a size greedy algorithm, and the like.

In a possible implementation, the determining, from the N sentences based on the scores of the N sentences and the lengths of the N sentences, the M sentences whose scores have the largest sum and whose lengths have the sum less than the summary length includes: processing the scores of the N sentences and the lengths of the N sentences by using a second model, to obtain processing results of the N sentences, where the processing results are used to determine, from the N sentences, the M sentences whose score sum is largest and whose length sum is less than the length threshold. In the foregoing implementation, the user equipment may obtain the second model approximate to the objective algorithm, and input the scores of the N sentences of the target text and the lengths of the N sentences of the target text into the second model, to process the scores of the N sentences of the target text and the lengths of the N sentences of the target text by using the second model, so as to obtain and output the processing results of the N sentences of the target text. The processing results usually include indicators indicating whether the N sentences of the target text are selected. Therefore, the processing results may be used to determine, from the N sentences, the M sentences whose score sum is largest and whose length sum is less than the length threshold of the summary.

In a possible implementation, the processing the scores of the N sentences and the lengths of the N sentences by using a second model, to obtain processing results of the N sentences includes: performing a linear operation on the scores of the N sentences and the lengths of the N sentences by using the second model, to obtain first representations of the N sentences; performing transformer model-based processing on the first representations by using the second model, to obtain second representations of the N sentences; performing a linear operation on the second representations by using the second model, to obtain third representations of the N sentences; and performing a nonlinear operation on the third representations by using the second model, to obtain the processing results of the N sentences. In the foregoing implementation, the user equipment may input the scores of the N sentences of the target text and the lengths of the N sentences of the target text into the second model, so that the second model concatenates the scores of the N sentences of the target text and the lengths of the N sentences of the target text, and then performs the linear operation on a result obtained through concatenation, to obtain the first representations of the N sentences of the target text. After obtaining the first representations of the N sentences of the target text, the second model may sequentially perform multi-head attention mechanism-based processing, feedforward network-based processing, residual network-based processing, and the like (namely, transformer model-based processing) on the first representations of the N sentences of the target text, to obtain the second representations of the N sentences of the target text. After obtaining the second representations of the N sentences of the target text, the second model may perform a linear operation on the second representations of the N sentences of the target text, to obtain the third representations of the N sentences of the target text. After the third representations of the N sentences of the target text are obtained, the second model may perform the nonlinear operation on the third representations of the N sentences of the target text, to obtain and output the processing results of the N sentences of the target text. The processing results usually include indicators indicating whether the N sentences of the target text are selected. Therefore, the user equipment may select the M sentences from the N sentences based on the processing results, the score sum of the selected M sentences is largest, and the length sum of the M sentences is less than the length threshold of the summary.

In a possible implementation, the scoring the N sentences by using the first model, to obtain scores of the N sentences includes: mapping the N sentences by using the first model, to obtain fourth representations of the N sentences; and performing transformer model-based processing on the fourth representations by using the first model, to obtain the scores of the N sentences. In the foregoing implementation, after the target text is obtained, the user equipment may input the N sentences of the target text into the first model, so that the first model maps the N sentences of the target text, to obtain the fourth representations of the N sentences of the target text. After obtaining the fourth representations of the N sentences of the target text, the first model sequentially performs multi-head attention mechanism-based processing, feedforward network-based processing, residual network-based processing, and the like (namely, transformer model-based processing) on the fourth representations of the N sentences of the target text, to obtain and output the scores of the N sentences of the target text. In this case, the user equipment may successfully obtain the scores of the N sentences of the target text.

In a possible implementation, the target text is input by the user to the user equipment, and the length threshold of the summary may be set by the user on a display interface provided by the user equipment.

A second aspect of embodiments of this application provides a model training method. The method includes: When a first to-be-trained model needs to be trained, a training device may first obtain a batch of training data in a first training data set. The batch of training data includes a first text, the first text includes P first sentences, lengths of the P first sentences are known, and P is a positive integer greater than or equal to 2.

After obtaining the first text, the training device may input the P first sentences of the first text into the first to-be-trained model, to score the P first sentences of the first text by using the first to-be-trained model, so as to obtain scores of the P first sentences of the first text. In the P first sentences of the first text, the scores of the P first sentences indicate profits of the P first sentences in the first file.

After obtaining the scores of the P first sentences of the first text, the training device may further obtain the lengths of the P first sentences of the first text and a second model that is approximate to an objective algorithm. Then, the training device may input the scores of the P first sentences of the first text and the lengths of the P first sentences of the first text into the second model, to process the scores of the P first sentences of the first text and the lengths of the P first sentences of the first text by using the second model, so as to obtain and output processing results of the P first sentences of the first text. The processing results usually include indicators indicating whether the P first sentences of the first text are selected. Therefore, the processing results may be used to determine, from the P first sentences, Q first sentences whose score sum is largest and whose length sum is less than a length threshold of a summary, where Q is a positive integer greater than or equal to 1, and Q is less than or equal to P.

After obtaining the Q first sentences whose score sum is largest and whose length sum is less than the length threshold of the summary, the training device may update a parameter of the first to-be-trained model based on the Q first sentences, to obtain a first model.

The first model obtained through training in the foregoing method has an automatic summarization function. Specifically, after a target text including N sentences is obtained, the N sentences may be scored by using the first model, to obtain scores of the N sentences. The scores of the N sentences indicate profits of the N sentences in the target text. Then, M sentences whose score sum is largest and whose length sum is less than a length threshold may be selected from the N sentences based on the scores of the N sentences and lengths of the N sentences. Finally, the selected M sentences may be used to form a summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

In a possible implementation, the method further includes: obtaining a second text, where the second text includes X second sentences, and X≥2; processing real scores of the X second sentences and lengths of the X second sentences by using a second to-be-trained model, to obtain processing results of the X second sentences, where the processing results of the X second sentences are used to determine, from the X second sentences, Y second sentences whose score sum is largest and whose length sum is less than the length threshold, and X≥Y≥1; obtaining a target loss based on real processing results of the X second sentences and the processing results of the X second sentences, where the target loss indicates a difference between the real processing results of the X second sentences and the processing results of the X second sentences; and updating a parameter of the second to-be-trained model based on the target loss until a model training condition is met, to obtain the second model. In the foregoing implementation, when the second to-be-trained model needs to be trained, the training device may first obtain a batch of training data in a second training data set. The batch of training data includes the second text, and the second text includes the X second sentences (where X is a positive integer greater than or equal to 2). It should be noted that a real score of each second sentence is known, and a real probability that each sentence is selected is also known. That is, real processing results of the X second sentences are known, and a length of each second sentence is also known. After obtaining the second text, the training device may input real scores of the X second sentences of the second text and lengths of the X second sentences of the second text into the second to-be-trained model, to process the real scores and the lengths of the X second sentences of the second text by using the second to-be-trained model, so as to obtain the processing results of the X second sentences of the second text. The processing results usually include indicators indicating whether the X second sentences of the second text are selected. Therefore, the processing results may be used to determine, from the X second sentences, Y second sentences whose score sum is largest and whose length sum is less than the length threshold (where Y is a positive integer greater than or equal to 1, and Y is less than or equal to X). After the processing results of the X second sentences of the second text are obtained, because the real processing results of the X second sentences of the second text are known, the training device may compute the processing results of the X second sentences of the second text and the real processing results of the X second sentences of the second text by using a preset loss function, to obtain the target loss. The target loss indicates the difference between the processing results of the X second sentences of the second text and the real processing results of the X second sentences of the second text. After obtaining the target loss, the training device may update a parameter of the second to-be-trained model by using the target loss, and continue to train, by using another batch of training data in the second training data set, the second to-be-trained model whose parameter is updated, until the model training condition is met, to obtain the second model.

In a possible implementation, the processing the scores of the P first sentences and the lengths of the P first sentences by using the second model, to obtain the processing results of the P first sentences includes: performing a linear operation on the scores of the P first sentences and the lengths of the P first sentences by using the second model, to obtain first representations of the P first sentences; performing transformer model-based processing on the first representations by using the second model, to obtain second representations of the P first sentences; performing a linear operation on the second representations by using the second model, to obtain third representations of the P first sentences; and performing a nonlinear operation on the third representations by using the second model, to obtain the processing results of the P first sentences.

In a possible implementation, the scoring the P first sentences by using the first to-be-trained model, to obtain scores of the P first sentences includes: mapping the P first sentences by using the first to-be-trained model, to obtain fourth representations of the P first sentences; and performing transformer model-based processing on the fourth representations by using the first to-be-trained model, to obtain the scores of the P first sentences.

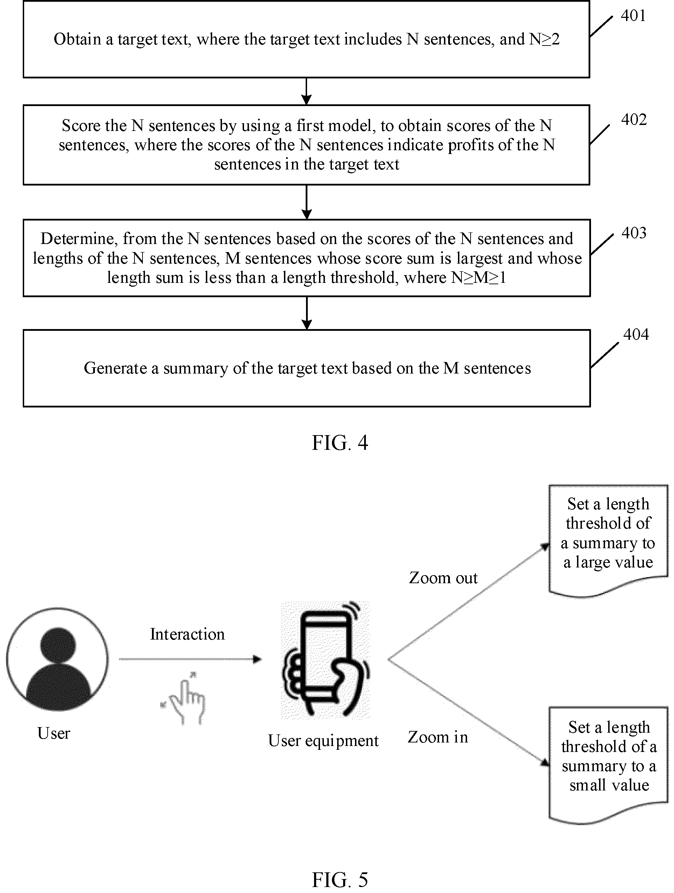

In a possible implementation, the updating a parameter of the first to-be-trained model based on the Q first sentences, to obtain a first model includes: obtaining a representation of the first text by using a third to-be-trained model; obtaining a similarity between the fourth representations of the Q first sentences and the representation of the first text by using the third to-be-trained model; and updating the parameter of the first to-be-trained model and a parameter of the third to-be-trained model based on the similarity until a model training condition is met, to respectively obtain the first model and the third model. In the foregoing implementation, after obtaining the processing results of the P first sentences of the first text, the training device may multiply the processing results of the P first sentences of the first text by the fourth representations of the P first sentences of the first text, to select, from the fourth representations of the P first sentences of the first text, fourth representations of the Q first sentences whose score sum is largest and whose length sum is less than the length threshold of the summary. After obtaining the fourth representations of the Q first sentences, the training device may input the fourth representations of the Q first sentences and the first text into the third to-be-trained model. In this case, the third to-be-trained may first map the first text to obtain the representation of the first text, and then perform a series of processing on the fourth representations of the Q first sentences and the representation of the first text, to obtain the similarity between the fourth representations of the Q first sentences and the representation of the first text. After obtaining the similarity between the fourth representations of the Q first sentences and the representation of the first text, the training device may update the parameter of the first to-be-trained model and the parameter of the third to-be-trained model based on the similarity, and continue to train, by using another batch of training data in the first training data set, the first to-be-trained model whose parameter is updated and the third to-be-trained model whose parameter is updated, until the model training condition is met, to obtain the third model and the first model in the embodiment shown in FIG. 4.

A third aspect of embodiments of this application provides a summary generation apparatus. The apparatus includes: an obtaining module, configured to obtain a target text, where the target text includes N sentences, and N≥2; a scoring module, configured to score the N sentences by using a first model, to obtain scores of the N sentences, where the scores of the N sentences indicate profits of the N sentences in the target text; a determining module, configured to determine, from the N sentences based on the scores of the N sentences and lengths of the N sentences, M sentences whose score sum is largest and whose length sum is less than a length threshold, where N≥M≥1; and a generation module, configured to generate a summary of the target text based on the M sentences.

It can be learned from the foregoing apparatus that, after the target text including the N sentences is obtained, the N sentences may be scored by using the first model, to obtain the scores of the N sentences. The scores of the N sentences indicate the profits of the N sentences in the target text. Then, the M sentences whose score sum is largest and whose length sum is less than the length threshold may be selected from the N sentences based on the scores of the N sentences and the lengths of the N sentences. Finally, the selected M sentences may be used to form the summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

In a possible implementation, the determining module is configured to compute the scores of the N sentences and the lengths of the N sentences by using an objective algorithm, to determine, from the N sentences, the M sentences whose score sum is largest and whose length sum is less than the length threshold.

In a possible implementation, the objective algorithm is any one of the following: a dynamic programming algorithm, a backtracking method, a branch and bound method, and a greedy algorithm.

In a possible implementation, the determining module is configured to process the scores of the N sentences and the lengths of the N sentences by using a second model, to obtain processing results of the N sentences, where the processing results are used to determine, from the N sentences, the M sentences whose score sum is largest and whose length sum is less than the length threshold.

In a possible implementation, the determining module is configured to: perform a linear operation on the scores of the N sentences and the lengths of the N sentences by using the second model, to obtain first representations of the N sentences; performing transformer model-based processing on the first representations by using the second model, to obtain second representations of the N sentences; performing a linear operation on the second representations by using the second model, to obtain third representations of the N sentences; and performing a nonlinear operation on the third representations by using the second model, to obtain the processing results of the N sentences.

In a possible implementation, the scoring module is configured to: map the N sentences by using the first model, to obtain fourth representations of the N sentences; and performing transformer model-based processing on the fourth representations by using the first model, to obtain the scores of the N sentences.

In a possible implementation, the target text is input by a user, and the length threshold is set by the user.

A fourth aspect of embodiments of this application provides a model training apparatus. The apparatus includes: a first obtaining module, configured to obtain a first text, where the first text includes P first sentences, and P≥2; a scoring module, configured to score the P first sentences by using a first to-be-trained model, to obtain scores of the P first sentences, where the scores of the P first sentences indicate profits of the P first sentences in the first text; a first processing module, configured to process the scores of the P first sentences and lengths of the P first sentences by using a second model, to obtain processing results of the P first sentences, where the processing results of the P first sentences are used to determine, from the P first sentences, Q first sentences whose score sum is largest and whose length sum is less than a length threshold, and P≥Q≥1; and a first update module, configured to update a parameter of the first to-be-trained model based on the Q first sentences, to obtain a first model.

The first model obtained through training by the foregoing apparatus has an automatic summarization function. Specifically, after a target text including N sentences is obtained, the N sentences may be scored by using the first model, to obtain scores of the N sentences. The scores of the N sentences indicate profits of the N sentences in the target text. Then, M sentences whose score sum is largest and whose length sum is less than the length threshold may be selected from the N sentences based on the scores of the N sentences and lengths of the N sentences. Finally, the selected M sentences may be used to form a summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

In a possible implementation, the apparatus further includes: a second obtaining module, configured to obtain a second text, where the second text includes X second sentences, and X≥2; a second processing module, configured to process real scores of the X second sentences and lengths of the X second sentences by using a second to-be-trained model, to obtain processing results of the X second sentences, where the processing results of the X second sentences are used to determine, from the X second sentences, Y second sentences whose score sum is largest and whose length sum is less than the length threshold, and X≥Y≥1; a third obtaining module, configured to obtain a target loss based on real processing results of the X second sentences and the processing results of the X second sentences, where the target loss indicates a difference between the real processing results of the X second sentences and the processing results of the X second sentences; and a second update module, configured to update a parameter of the second to-be-trained model based on the target loss until a model training condition is met, to obtain the second model.

In a possible implementation, the first processing module is configured to: perform a linear operation on the scores of the P first sentences and the lengths of the P first sentences by using the second model, to obtain first representations of the P first sentences; performing transformer model-based processing on the first representations by using the second model, to obtain second representations of the P first sentences; performing a linear operation on the second representations by using the second model, to obtain third representations of the P first sentences; and performing a nonlinear operation on the third representations by using the second model, to obtain the processing results of the P first sentences.

In a possible implementation, the scoring module is configured to: map the P first sentences by using the first to-be-trained model, to obtain fourth representations of the P first sentences; and performing transformer model-based processing on the fourth representations by using the first to-be-trained model, to obtain the scores of the P first sentences.

In a possible implementation, the first update module is configured to: obtain a representation of the first text by using a third to-be-trained model; obtain a similarity between the fourth representations of the Q first sentences and the representation of the first text by using the third to-be-trained model; and update the parameter of the first to-be-trained model and a parameter of the third to-be-trained model based on the similarity until a model training condition is met, to respectively obtain the first model and the third model.

A fifth aspect of embodiments of this application provides a summary generation apparatus. The apparatus includes a memory and a processor. The memory stores code, and the processor is configured to execute the code. When the code is executed, the summary generation apparatus performs the method according to any one of the first aspect or the possible implementations of the first aspect.

A sixth aspect of embodiments of this application provides a model training apparatus. The apparatus includes a memory and a processor. The memory stores code, and the processor is configured to execute the code. When the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, after a target text including N sentences is obtained, the N sentences may be scored by using a first model, to obtain scores of the N sentences. The scores of the N sentences indicate profits of the N sentences in the target text. Then, M sentences whose score sum is largest and whose length sum is less than the length threshold may be selected from the N sentences based on the scores of the N sentences and lengths of the N sentences. Finally, the selected M sentences may be used to form a summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

**BRIEF DESCRIPTION OF DRAWINGS**

FIG. 1 is a diagram of a structure of an artificial intelligence main framework;
FIG. 2a is a diagram of a structure of a text processing system according to an embodiment of this application;
FIG. 2b is a diagram of another structure of a text processing system according to an embodiment of this application;
FIG. 2c is a diagram of a related device for text processing according to an embodiment of this application;
FIG. 3 is a diagram of an architecture of a system 100 according to an embodiment of this application;
FIG. 4 is a schematic flowchart of a summary generation method according to an embodiment of this application;

FIG. 5 is a diagram of interaction between a user and user equipment according to an embodiment of this application;

FIG. 6 is a diagram of a structure of a first model according to an embodiment of this application;

FIG. 7 is a diagram of a structure of a second model according to an embodiment of this application;

FIG. 8 is a schematic flowchart of a model training method according to an embodiment of this application;

FIG. 9 is a diagram of a structure of a third to-be-trained model according to an embodiment of this application;

FIG. 10 is a diagram of another structure of a third to-be-trained model according to an embodiment of this application;

FIG. 11 is a diagram of another structure of a third to-be-trained model according to an embodiment of this application;

FIG. 12 is a diagram of another structure of a third to-be-trained model according to an embodiment of this application;

FIG. 13 is a diagram of a structure of a summary generation apparatus according to an embodiment of this application;

FIG. 14 is a diagram of a structure of a model training apparatus according to an embodiment of this application;

FIG. 15 is a diagram of a structure of an execution device according to an embodiment of this application;

FIG. 16 is a diagram of a structure of a training device according to an embodiment of this application; and

FIG. 17 is a diagram of a structure of a chip according to an embodiment of this application.

## DESCRIPTION OF EMBODIMENTS

Embodiments of this application provide a summary generation method and a related device thereof, to automatically generate a summary that is of a target text and that meets a length limit. In addition, the generated summary of the target text is usually a summary with high quality, and can meet a reading requirement of a user, to improve user experience.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In an automatic summarization technology, a computer is used to automatically implement text analysis and content induction to automatically generate a summary, that is, express main content of a text in a concise form based on a user requirement. The automatic summarization technology can effectively help a user find content that the user is interested in from a retrieved article, to improve a reading speed and quality.

Currently, the automatic summarization technology may be implemented by using a neural network model in an AI technology, that is, the text is processed by using the neural network model, to extract the summary of the text. Specifically, the neural network model may first map a plurality of sentences of the text, to obtain representations of the plurality of sentences, and then perform multi-head attention mechanism-based processing on the representations of the plurality of sentences, to obtain scores of the plurality of sentences. In the plurality of sentences, a score of any sentence may represent a profit of the sentence in the text. In this way, several sentences with high scores (namely, several sentences with high profits) may form the summary of the text.

However, in the foregoing summary generation process, only a profit of a sentence in the text is considered, and a considered factor is single. As a result, the finally generated summary of the text is not a summary with high quality, and cannot meet a reading requirement of the user. This reduces user experience.

Further, currently, most neural network models having a summary generation function are obtained in a supervised learning training manner, and it is difficult to obtain such neural network models in an unsupervised learning training manner. In view of this, how to obtain, in the supervised learning training manner, a neural network model having the summary generation function becomes an urgent problem to be resolved.

Further, in the summary generation process, the user usually needs to complete only an operation of inputting the text, and participation of the user is excessively low. How to enable the user to participate more in the summary generation process, that is, enable the user to interact more with a terminal device, to meet a user-defined requirement of the user for the summary becomes an urgent problem to be resolved.

To resolve the foregoing problem, an embodiment of this application provides a summary generation method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using knowledge. In other words, the artificial intelligence technology is a branch of computer science, and attempts to understand essence of intelligence and produce a new intelligent machine that can react in a similar manner to human intelligence. Using artificial intelligence to process data is a common application manner of artificial intelligence.

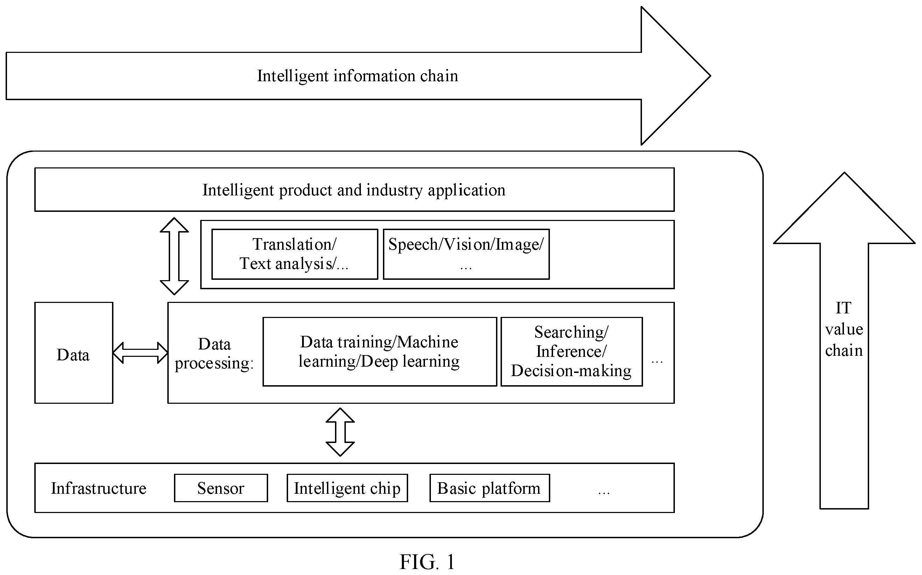

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control. A typical function is searching and matching.
Decision-making is a process of making a decision after intelligent information is inferred, and usually provides functions such as classification, ranking, and prediction.

(4) General capability

After the data processing mentioned above is performed on the data, some general capabilities may be further formed based on a data processing result. For example, the general capability may be an algorithm or a general system, for example, translation, text analysis, computer vision processing, speech recognition, or image recognition.

(5) Intelligent product and industry application

The intelligent product and industry application are products and applications of the artificial intelligence system in various fields, and encapsulate overall solutions of the artificial intelligence, so that decision-making for intelligent information is productized and an application is implemented. Application fields of the intelligent information decision-making mainly include intelligent terminals, intelligent transportation, intelligent health care, autonomous driving, smart cities, and the like.
The following describes several application scenarios of this application.

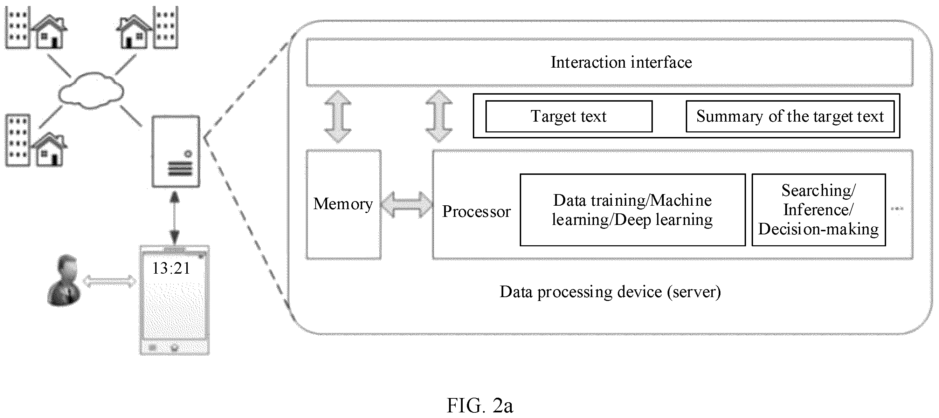

FIG. 2a is a diagram of a structure of a text processing system according to an embodiment of this application. The text processing system includes user equipment and a data processing device. The user equipment includes an intelligent terminal like a mobile phone, a personal computer, or an information processing center. The user equipment is usually a text processing initiate end, and is used as a text processing initiator. Usually, a user initiates a request by using the user equipment.
The data processing device may be a device or a server that has a data processing function, for example, a cloud server, a network server, an application server, or a management server. The data processing device receives a text processing request from the intelligent terminal by using an interaction interface, and then performs text processing in manners such as machine learning, deep learning, searching, inference, and decision-making by using a data storage memory and a data processing processor. The memory in the data processing device may be a general name, and includes a local storage and a database storing historical data. The database may be in the data processing device, or may be in another network server.

In the text processing system shown in FIG. 2a, the user equipment may receive an instruction of the user. For example, the user equipment may obtain a target text input/selected by the user, and then initiate a processing request including the target text to the data processing device, so that the data processing device executes a text processing application for the target text obtained by the user equipment, to obtain a summary of the target text. For example, the user equipment may obtain a target text (where the target text may be a long text or a short text) input by the user, and then initiate a processing request for the target text to the data processing device, so that the data processing device performs automatic summarization technology-based processing on the target text, to obtain a summary of the target text.

In FIG. 2a, the data processing device may perform a summary generation method according to an embodiment of this application.

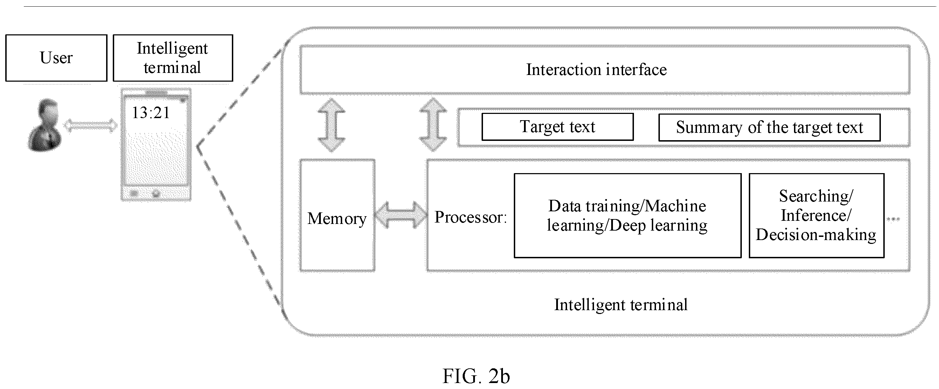

FIG. 2b is a diagram of another structure of the text processing system according to an embodiment of this application. In FIG. 2b, user equipment is directly used as a data processing device. The user equipment can directly obtain an input from a user and directly process the input by using hardware of the user equipment. A specific process is similar to that in FIG. 2a. For details, refer to the foregoing descriptions. Details are not described herein again.

In the text processing system shown in FIG. 2b, the user equipment may receive an instruction of the user. For example, the user equipment may obtain a target text (where the target text may be a long text or a short text) selected by the user in the user equipment, and then the user equipment executes a text processing application (equivalent to performing automatic summarization technology-based processing) for the target text, to obtain a summary of the target text.

In FIG. 2b, the user equipment may perform a summary generation method according to an embodiment of this application.

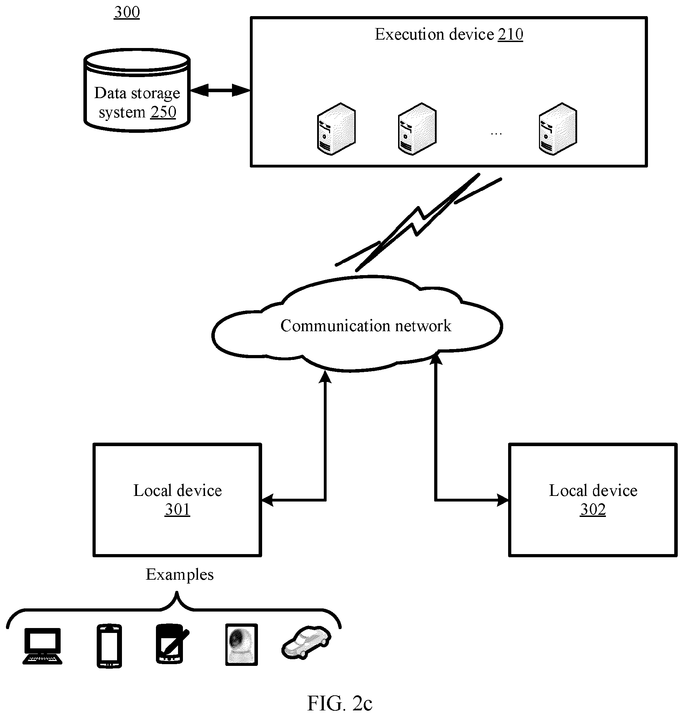

FIG. 2c is a diagram of a related device for text processing according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training, machine learning, or deep learning by using a neural network model or another model (for example, a model based on a support vector machine), and execute a text processing application for a text by using a model obtained through data training or learning, to obtain a corresponding processing result.

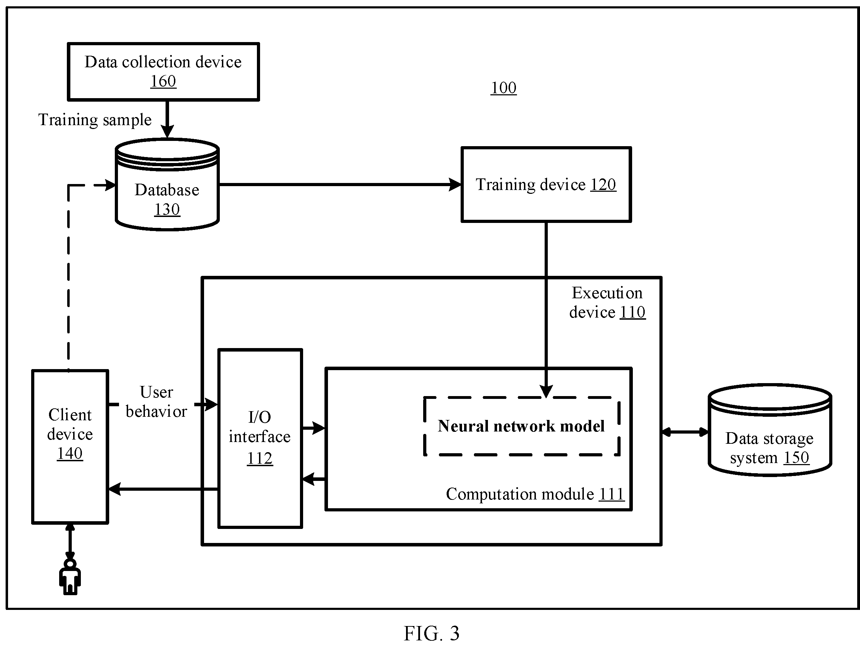

FIG. 3 is a diagram of an architecture of a system 100 according to an embodiment of this application. In FIG. 3, an execution device 110 is provided with an input/output (input/output, I/O) interface 112, to exchange data with an external device. A user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a computation module 111 of the execution device 110 performs related processing such as computation (for example, performs function implementation of a neural network in this application), the execution device 110 may invoke data, code, and the like in a data storage system 150 for corresponding processing, and may further store, in the data storage system 150, data, instructions, and the like that are obtained through corresponding processing.

Finally, the I/O interface 112 returns a processing result to the client device 140, to provide the processing result for the user.

It should be noted that, for different objectives or different tasks, a training device 120 may generate corresponding target model/rules based on different training data. The corresponding target model/rules may be used to achieve the foregoing objectives or complete the foregoing tasks, to provide a required result for the user. The training data may be stored in a database 130, and is a training sample collected by the data collection device 160.

In a case shown in FIG. 3, the user may manually provide input data and the user may manually provide the input data on an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computation work of the computation module 111. The chip may alternatively be disposed in the training device 120 shown in FIG. 3, to complete training work of the training device 120 and output the target model/rule.

The neural network processing unit NPU serves as a coprocessor, and may be disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit includes a plurality of processing units (process engine, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from an input memory, to perform a matrix operation on the matrix B, and stores an obtained partial result or an obtained final result of the matrix in an accumulator (accumulator).

A vector computation unit may perform further processing such as vector multiplication, vector addition, an exponent operation, a logarithm operation, or value comparison on an output of the operation circuit. For example, the vector computation unit may be configured to perform network computation, such as pooling (pooling), batch normalization (batch normalization), or local response normalization (local response normalization) at a non-convolutional/non-FC layer in a neural network.

In some implementations, the vector computation unit can store a processed output vector in a unified cache. For example, the vector computation unit may apply a nonlinear function to an output, for example, a vector of an accumulated value, of the operation circuit to generate an activation value. In some implementations, the vector computation unit generates a normalized value, a combined value, or both a normalized value and a combined value. In some implementations, the processed output vector can be used as an activation input to the operation circuit, for example, the processed output vector can be used at a subsequent layer of the neural network.

A unified memory is configured to store input data and output data.

For weight data, a direct memory access controller (direct memory access controller, DMAC) directly transfers input data from an external memory to the input memory and/or the unified memory, stores, in the weight memory, weight data in the external memory, and stores, in the external memory, data in the unified memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions cached in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses *xs* and an intercept of 1 as an input. An output of the operation unit may be as follows:

$$h_{W,b}\left(x\right) = f\left(W^{T}x\right) = f\left(\sum\nolimits_{s=1}^{n} W_{s}x_{s} + b\right) \quad (1)$$

s=1, 2, ..., or n, n is a natural number greater than 1, $Ws$ is a weight of $xs$, $b$ is bias of the neuron, and $f$ is an activation function (activation function) of the neuron, and is used to introduce a nonlinear feature into the neural network to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. From a physical layer, work at each layer of the neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operations of 1, 2, and 3 are performed by $Wx$ , the operation of 4 is performed by $+b$ , and the operation of 5 is performed by $a()$. The word "space" is used herein for expression because a classified object is not a single thing, but a type of things. Space is a set of all individuals of this type of things. $W$ is a weight vector, and each value in the vector represents a weight value of one neuron at this layer of a neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, a training process of the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, for example, a weight matrix, of an optimal neural network model.

The following describes the method provided in this application from a neural network training side and a neural network application side.

The model training method provided in embodiments of this application relates to data sequence processing, and may be specifically applied to a method like data training, machine learning, and deep learning, to perform symbolized and formalized intelligent information modeling, extraction, preprocessing, training, and the like on training data (for example, a first text and a second text in this application), and finally obtain a trained neural network (for example, a first model, a second model, and a third model in this application). In addition, the summary generation method provided in embodiments of this application may use the foregoing trained neural network. Input data (for example, a target text in this application) may be input into the trained neural network, to obtain output data (for example, scores of a plurality of sentences of the target text in this application and processing results of the plurality of sentences). It should be noted that the model training method and the summary generation method provided in embodiments of this application are invented based on a same concept, and may also be understood as two parts of a system, or two stages of an overall procedure, for example, a model training stage and a model application stage.

For ease of description, description is provided in the following by using an example in which the summary generation method provided in embodiments of this application is implemented by user equipment. FIG. 4 is a schematic flowchart of a summary generation method according to an embodiment of this application. As shown in FIG. 4, the method includes the following steps.

401: Obtain a target text, where the target text includes N sentences, and N≥2.

In this embodiment, when a user needs to obtain a summary of the target text, the user may input or select the target text in user equipment, so that the user equipment determines that the summary of the target text needs to be generated. The target text includes the N (where N is a positive integer greater than or equal to 2) sentences, and each sentence includes one or more words, that is, each sentence has a specific length, and the length of each sentence is known.

It should be noted that the user equipment may provide a user interface for the user, and the user interface includes an input window and a display window. The input window is used by the user to input or select the target text. To be specific, the user may input the target text in the input window, or the user may select the target text from a text list displayed in the input window. The display window is used to display the summary of the target text for the user. It should be noted that a size of the display window usually determines a length threshold of the summary (which may also be referred to as a word count threshold of the summary, or may also be referred to as a target length limit of the summary). The length threshold of the summary may be determined in the following manner: (1) As shown in FIG. 5 (FIG. 5 is a diagram of interaction between the user and the user equipment according to an embodiment of this application), the user may slide and zoom in/out the display window through gesture control. If the user zooms in (zoom in) the display window, it indicates that a quantity of words of the summary that the user needs to read is small, and the user equipment may set the length threshold of the summary to a small value. If the user zooms out (zoom out) the display window, it indicates that a quantity of words of the summary that the user needs to read is large, and the user equipment may set the length threshold of the summary to a large value. (2) The user equipment may adjust the length threshold based on information of the user and the size of the display window. For example, in working hours, the user often uses fragmentary time to quickly read and master information. In this case, a quantity of words of a summary that needs to be presented may be small, and the user equipment may set a length threshold of the summary to a small value. For another example, when the user equipment detects that the user is in a moving state (for example, the user is in a vehicle), a quantity of words of a summary that needs to be presented may be smaller, so that the user can easily and quickly complete simple reading in the moving state. Therefore, the user equipment may set a length threshold of the summary to a smaller value.

402: Score the N sentences by using a first model, to obtain scores of the N sentences, where the scores of the N sentences indicate profits of the N sentences in the target text.

After obtaining the target text, the user equipment may input the N sentences of the target text into the first model (a trained neural network model, which may also be referred to as an extractive summarization model), to score the N sentences of the target text by using the first model, to obtain the scores of the N sentences of the target text. In the N sentences of the target text, a score of an $i^{th}$ sentence indicates a profit (which may also be referred to as an importance degree) of the $i^{th}$ sentence in the target file, where i=1, ..., or N.

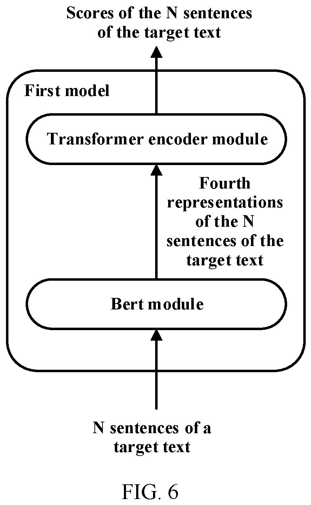

Specifically, as shown in FIG. 6 (FIG. 6 is a diagram of a structure of the first model according to this embodiment of this application), the first model (which may also be referred to as an extraction model) may include a bert module and a transformer encoder module (namely, the foregoing transformer model). An input end of the bert module is an input end of the first model, an output end of the bert module is connected to an input end of the transformer encoder module, and an output end of the transformer encoder module is an output end of the first model. In this case, the user equipment may obtain the scores of the N sentences of the target text in the following manner.

(1) After obtaining the target text, the user equipment may input the N sentences of the target text into the bert module of the first model, so that the bert module maps the N sentences of the target text, to obtain fourth representations of the N sentences of the target text, and sends the fourth representations of the N sentences of the target text to the transformer encoder module.

(2) After obtaining the fourth representations of the N sentences of the target text, the transformer encoder module sequentially performs multi-head attention mechanism-based processing, feedforward network-based processing, residual network-based processing, and the like on the fourth representations of the N sentences of the target text, to obtain and output the scores of the N sentences of the target text. In this case, the user equipment may successfully obtain the scores of the N sentences of the target text.

403: Determine, from the N sentences based on the scores of the N sentences and lengths of the N sentences, M sentences whose score sum is largest and whose length sum is less than a length threshold, where N≥M≥1.

After obtaining the scores of the N sentences of the target text, the user equipment may further obtain the lengths of the N sentences of the target text. To select, from the N sentences of the target text, a sentence combination that has a largest profit and that meets a word count limit, the user equipment may analogize the problem to a knapsack problem. The knapsack problem may be described by using the following formula:

$$V = \arg\max_{S \subseteq D} f(S)$$

$$\sum_{j \in S} l_j < C \qquad (2)$$

$$f(S) = \sum_{j=1}^{M} s_j$$

In the foregoing formula, $V$ is an objective function of the knapsack problem, $S$ is the M sentences (where M is a positive integer greater than or equal to 1, and M is less than or equal to N) selected from the N sentences of the target text, namely, a set of the selected sentences, $D$ is the N sentences of the target text, namely, a set of selectable sentences (namely, the target text), $l_j$ is a length of a selected j^th sentence, $C$ is the length threshold of the summary, and $s_j$ is a score of the selected j^th sentence.

Based on this, the user equipment may use the scores of the N sentences of the target text and the lengths of the N sentences of the target text as initial values of the knapsack problem, and solve the knapsack problem. An obtained solution is the M sentences that are in the N sentences of the target text and whose score sum is largest and whose length sum is less than the length threshold of the summary.

Specifically, the user equipment may select the M sentences from the N sentences of the target text in a plurality of manners.

(1) The user equipment may obtain an objective algorithm (namely, an algorithm used to solve the knapsack problem), use the scores of the N sentences of the target text and the lengths of the N sentences of the target text as initial values of the objective algorithm, and use, as an optimization objective (a limitation condition) of the objective algorithm, the largest score sum and the length sum less than the length threshold of the summary. Then, the user equipment may run the objective algorithm, to perform optimization computation on the scores of the N sentences of the target text and the lengths of the N sentences of the target text by using the objective algorithm, so as to obtain, from the N sentences of the target text, the M sentences whose score sum is largest and whose length sum is less than the length threshold of the summary.

Further, the objective algorithm is any one of the following: a dynamic programming (dynamic programming, DP) algorithm, a backtracking method, a branch and bound method, and a greedy algorithm. The greedy algorithm is any one of the following: a profit density greedy (density greedy) algorithm, a profit greedy (profit greedy) algorithm, a value greedy algorithm, and the like.

(2) The user equipment may obtain a second model (a trained neural network model) approximate to the objective algorithm, and input the scores of the N sentences of the target text and the lengths of the N sentences of the target text into the second model, to process the scores of the N sentences of the target text and the lengths of the N sentences of the target text by using the second model, so as to obtain and output processing results of the N sentences of the target text. The processing results usually include indicators indicating whether the N sentences of the target text are selected. Therefore, the processing results may be used to determine, from the N sentences, the M sentences whose score sum is largest and whose length sum is less than the length threshold of the summary.

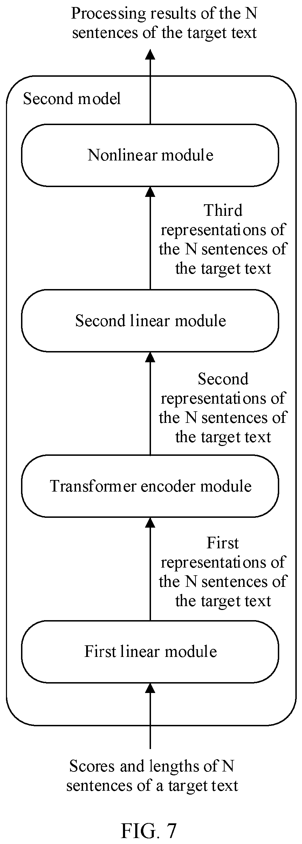

Further, as shown in FIG. 7 (FIG. 7 is a diagram of a structure of the second model according to this embodiment of this application), the second model (which may also be referred to as a knapsack transformer model) may include a first linear module, a transformer encoder module, a second linear module, and a nonlinear module. An input end of the first linear module is an input end of the second model, an output end of the first linear module is connected to an input end of the transformer encoder module, an output end of the transformer encoder module is connected to an input end of the second linear module, an output end of the second linear module is connected to an input end of the nonlinear module, and an output end of the nonlinear module is an output end of the second model. In this case, the user equipment may obtain the processing results of the N sentences of the target text in the following manner.

(2.1) The user equipment may input the scores of the N sentences of the target text and the lengths of the N sentences of the target text into the first linear module of the second model, so that the first linear module first concatenates the scores of the N sentences of the target text and the lengths of the N sentences of the target text, then perform a linear operation on a result obtained through concatenation, to obtain first representations of the N sentences of the target text, and send the first representations of the N sentences of the target text to the transformer encoder module.

(2.2) After obtaining the first representations of the N sentences of the target text, the transformer encoder module may sequentially perform multi-head attention mechanism-based processing, feedforward network-based processing, residual network-based processing, and the like on the first representations of the N sentences of the target text, to obtain second representations of the N sentences of the target text, and send the second representations to the second linear module.

(2.3) After obtaining the second representations of the N sentences of the target text, the second linear module may perform a linear operation on the second representations of the N sentences of the target text, to obtain third representations of the N sentences of the target text, and send the third representations to the nonlinear module.

(2.4) After obtaining the third representations of the N sentences of the target text, the nonlinear module may perform a nonlinear operation (for example, implement the nonlinear operation by using a sigmoid activation function) on the obtained third representations of the N sentences of the target text, to obtain and output the processing results of the N sentences of the target text. The processing results usually include the indicators (where a value of the indicator is usually 0 or 1) indicating whether the N sentences of the target text are selected. For example, in the N sentences of the target text, if an indicator indicating whether a first sentence is selected is 0, it indicates that the first sentence cannot be selected. If an indicator indicating whether a second sentence is selected is 1, it indicates that the second sentence can be selected. In this case, the user equipment may select the M sentences from the N sentences based on the processing results, where the score sum of the selected M sentences is largest, and the length sum of the M sentences is less than the length threshold of the summary.

404: Generate the summary of the target text based on the M sentences.

After obtaining the M sentences whose score sum is largest and whose length sum is less than the length threshold of the summary, the user equipment may form the summary of the target text by using the M sentences, and display the summary in the display window for the user to browse and use.

In this embodiment of this application, after the target text including the N sentences is obtained, the N sentences may be scored by using the first model, to obtain the scores of the N sentences. The scores of the N sentences indicate the profits of the N sentences in the target text. Then, the M sentences whose score sum is largest and whose length sum is less than the length threshold may be selected from the N sentences based on the scores of the N sentences and the lengths of the N sentences. Finally, the selected M sentences may be used to form the summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

Further, in this embodiment of this application, the length threshold of the summary may be controlled by a sliding operation of the user. To be specific, when the user zooms in the display window, the user may set the length threshold of the summary to a small value, and when the user zooms out the display window, the user may set the length threshold of the summary to a large value. It can be learned that, in the process of generating the summary of the target text, the user not only completes an operation of inputting the target text, but also completes an operation of setting the length threshold of the summary, so that participation of the user can be improved, and the user can participate more in the summary generation process, to meet a user-defined requirement for the summary.

In addition, the neural network model provided in this embodiment of this application may be further compared with a neural network model in a related technology. First, the second model provided in this embodiment of this application may be first compared with the neural network model in the related technology. A comparison result is shown in Table 1.

Table 1

| Model | Data set | Indicator 1 | Indicator 2 |
|---|---|---|---|
| Neural network model in a related technology 1 | Data set 1 | 2.70% | 73.40% |
| Neural network model in a related technology 2 | Data set 2 | - | 75.30% |
| Neural network model in a related technology 3 | Data set 2 | - | 92.70% |
| Second model (approximate to DP) provided in this application | Data set 1 | 0.70% | 93.80% |
| Second model (approximate to density greedy) provided in this application | Data set 1 | 0.35% | 96.80% |
| Second model (approximate to profit greedy) provided in this application | Data set 1 | 0.66% | 95.00% |
| Second model (approximate to DP) provided in this application | Data set 3 | 0.17% | 82.10% |
| Second model (approximate to density greedy) provided in this application | Data set 3 | 4.90% | 93.20% |
| Second model (approximate to profit greedy) provided in this application | Data set 3 | 6.80% | 86.30% |

It can be learned from Table 1 that the second model provided in this embodiment of this application achieves good effect on both the data set 2 and the data set 3, and has a specific advantage.

In addition, an overall model provided in this embodiment of this application may be further compared with an overall model in the related technology. A comparison result is shown in Table 2.

Table 2

| Model | Length threshold | Indicator 3 | Indicator 4 | Indicator 5 | Total score of sentences | Total length of sentences | Average length of sentences | Model size |
|---|---|---|---|---|---|---|---|---|
| Neural network model in a related technology 4 | 100 | 30.7 | 19.5 | 29.7 | 29.7 | 89 | 15 | |
| | 150 | 34.9 | 23.8 | 33.2 | 33.2 | 137.0 | 19 | |
| | 200 | 39.2 | 29.1 | 37.8 | 37.8 | 179 | 31 | |
| Neural network model in a related technology 5 | 100 | 30.9 | 19.1 | 29.9 | 74.4 | 87 | 17 | |
| | 150 | 34.8 | 24.1 | 33.2 | 76.3 | 132 | 23 | |
| | 200 | 37.5 | 27.9 | 36.1 | 77.8 | 174 | 36 | |
| Neural network model in a related technology 6 | 100 | 31.2 | 19.1 | 30.5 | 74.6 | 87 | 16 | 390 MB |
| | 150 | 34.6 | 23.9 | 32.9 | 76.1 | 134 | 21 | |
| | 200 | 36.5 | 26.9 | 35.3 | 77.4 | 175 | 34 | |
| Neural network model in a related technology 7 | 100 | 43.4 | 31.2 | 42.3 | 80.3 | 89 | 14 | 439 MB |
| | 150 | 45.2 | 34.3 | 43.3 | 80.6 | 136 | 19 | |
| | 200 | 42.7 | 32.9 | 41.1 | 80.2 | 178 | 32 | |
| First model and objective algorithm provided in this application | 100 | 37.0 | 22.8 | 35.5 | 75.8 | 80 | 10 | 1.20 GB/439 MB |
| | 150 | 37.0 | 25.8 | 35.6 | 77.3 | 137 | 18 | |
| | 200 | 39.6 | 30.1 | 38.2 | 78.1 | 178 | 33 | |
| First model and second model provided in this application | 100 | 37.1 | 26.5 | 37.5 | 77.1 | 88 | 14 | 1.52 GB/439 MB |
| | 150 | 41.9 | 30.2 | 42.1 | 79.1 | 133 | 19 | |
| | 200 | 41 | 28.5 | 39.4 | 78.4 | 174 | 31 | |

It can be learned from Table 2 that, compared with the model provided in the related technology, the overall model provided in this embodiment of this application significantly improves a plurality of evaluation indicators, and has better performance.

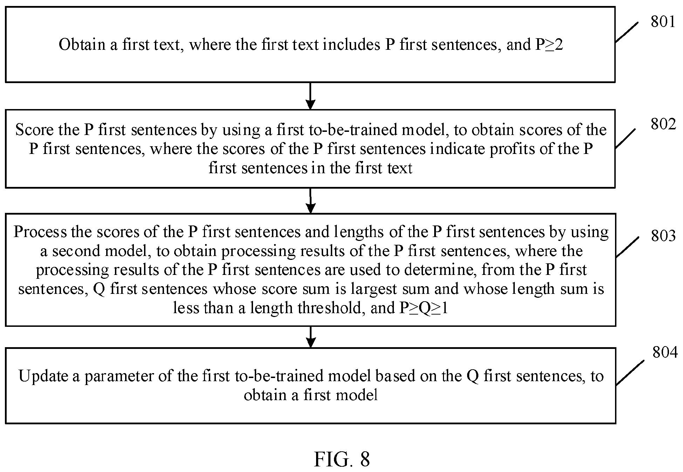

The foregoing describes in detail the summary generation method provided in embodiments of this application. The following describes a model training method provided in embodiments of this application. FIG. 8 is a schematic flowchart of a model training method according to an embodiment of this application. As shown in FIG. 8, the method includes the following steps.

801: Obtain a first text, where the first text includes P first sentences, and P≥2.

In this embodiment, when a first to-be-trained model (namely, an untrained neural network model) needs to be trained, a training device may first obtain a batch of training data in a first training data set. The batch of training data includes a first text, the first text includes P first sentences (where P is a positive integer greater than or equal to 2), and each first sentence includes one or more words. In other words, each first sentence has a specific length, and a length of each first sentence is known.

802: Score the P first sentences by using the first to-be-trained model, to obtain scores of the P first sentences, where the scores of the P first sentences indicate profits of the P first sentences in the first text.

After obtaining the first text, the training device may input the P first sentences of the first text into the first to-be-trained model, to score the P first sentences of the first text by using the first to-be-trained model, so as to obtain the scores of the P first sentences of the first text. In the P first sentences of the first text, a score of an $i^{th}$ first sentence indicates a profit (which may also be referred to as an importance degree) of the $i^{th}$ first sentence in the first file, where i=1, ..., or P.

Specifically, the training device may obtain the scores of the P first sentences of the first text in the following manner: First, the training device may map the P first sentences by using the first to-be-trained model, to obtain fourth representations of the P first sentences. Then, the training device may perform transformer model-based processing on the fourth representations by using the first to-be-trained model, to obtain the scores of the P first sentences.

It should be noted that for a specific process of processing the P first sentences of the first text by the first to-be-trained model, refer to a related description part of the specific process of processing the N sentences of the target text by the first model in step 402 in the embodiment shown in FIG. 4. Details are not described herein again.

803: Process the scores of the P first sentences and lengths of the P first sentences by using a second model, to obtain processing results of the P first sentences, where the processing results of the P first sentences are used to determine, from the P first sentences, Q first sentences whose score sum is largest and whose length sum is less than a length threshold, and P≥Q≥1.

After obtaining the scores of the P first sentences of the first text, the training device may further obtain the lengths of the P first sentences of the first text and the second model (a trained neural network model) that is approximate to an objective algorithm. Then, the training device may input the scores of the P first sentences of the first text and the lengths of the P first sentences of the first text into the second model, to process the scores of the P first sentences of the first text and the lengths of the P first sentences of the first text by using the second model, so as to obtain and output the processing results of the P first sentences of the first text. The processing results usually include indicators indicating whether the P first sentences of the first text are selected. Therefore, the processing results may be used to determine, from the P first sentences, the Q first sentences whose scores have the largest sum and whose lengths have the sum less than a length threshold of a summary (where Q is a positive integer greater than or equal to 1, and Q is less than or equal to P).

Specifically, the training device may obtain the processing results of the P first sentences of the first text in the following manner: First, the training device performs a linear operation on the scores of the P first sentences and the lengths of the P first sentences by using the second model, to obtain first representations of the P first sentences. Then, the training device may perform transformer model-based processing on the first representations by using the second model, to obtain second representations of the P first sentences. Then, the training device may perform a linear operation on the second representations by using the second model, to obtain third representations of the P first sentences. Finally, the training device may perform a nonlinear operation on the third representations by using the second model, to obtain the processing results of the P first sentences.

It should be noted that, for a specific process of processing the scores and the lengths of the P first sentences of the first text by the second model, refer to a related description part of the specific process of processing the scores and the lengths of the N sentences of the target text by the second model in step 403 in the embodiment shown in FIG. 4. Details are not described herein again.

More specifically, before training the first to-be-trained model (that is, before step 801), the training device may first complete training for a second to-be-trained model, to obtain the second model. The process includes the following steps.

(1) When the second to-be-trained model (namely, another untrained neural network model) needs to be trained, the training device may first obtain a batch of training data in a second training data set, where the batch of training data includes a second text, and the second text includes X second sentences (where X is a positive integer greater than or equal to 2). It should be noted that a real score of each second sentence (namely, a real importance degree of each second sentence in the second text) is known, and a real probability that each sentence is selected is also known. That is, real processing results of the X second sentences are known (the real processing results may be obtained by using the foregoing objective algorithm), and a length of each second sentence is also known.

It should be noted that the second training data set and the first training data set are usually two different data sets, and the second training data set may be obtained through sampling in the following manner: first, obtaining an original data set. Then, the training device may determine an average length of all sentences in the original data set, and determine, by using the average length of all the sentences and a maximum length that can be processed by the second to-be-trained model, an average quantity of sentences processed by the second to-be-trained model. In this case, a Poisson distribution may be constructed based on the average length of all the sentences, a gamma distribution may be constructed based on the average quantity of processed sentences, and a uniform distribution may be constructed based on a score of each sentence in the original data set. Finally, a new data set, namely, the second training data set, is manually sampled, which meets all the three distributions. The second training data set is provided to the training device.

(2) After obtaining the second text, the training device may input real scores of the X second sentences of the second text and lengths of the X second sentences of the second text into the second to-be-trained model, to process the real scores and the lengths of the X second sentences of the second text by using the second to-be-trained model, so as to obtain (predicted) processing results of the X second sentences of the second text. The processing results usually include (predicted) probabilities that the X second sentences of the second text are selected. Therefore, the processing results may be used to determine, from the X second sentences, Y second sentences whose score sum is largest and whose length sum is less than the length threshold (where Y is a positive integer greater than or equal to 1, and Y is less than or equal to X).

It should be noted that for a specific process of processing the real scores and the lengths of the X second sentences of the second text by the second to-be-trained model, refer to a related description part of the specific process of processing the scores and the lengths of the N sentences of the target text by the second model in step 403 in the embodiment shown in FIG. 4. Details are not described herein again.

(3) After the processing results of the X second sentences of the second text are obtained, because the real processing results of the X second sentences of the second text are known, the training device may compute the processing results of the X second sentences of the second text and the real processing results of the X second sentences of the second text by using a preset loss function, to obtain a target loss. The target loss indicates a difference between the processing results of the X second sentences of the second text and the real processing results of the X second sentences of the second text.

(4) After obtaining the target loss, the training device may update a parameter of the second to-be-trained model by using the target loss, and continue to train, by using another batch of training data in the second training data set, the second to-be-trained model whose parameter is updated, until a model training condition (for example, the target loss is converged) is met, to obtain the second model in the embodiment shown in FIG. 4.

804: Update a parameter of the first to-be-trained model based on the Q first sentences, to obtain the first model.

After obtaining the Q first sentences whose score sum is largest and whose length sum is less than the length threshold of the summary, the training device may update the parameter of the first to-be-trained model based on the Q first sentences, to obtain the first model in the embodiment shown in FIG. 4.

Specifically, the training device may obtain the first model through training in the following manner.

(1) After obtaining the processing results of the P first sentences of the first text, the training device may multiply the processing results of the P first sentences of the first text by the fourth representations of the P first sentences of the first text, to select, from the fourth representations of the P first sentences of the first text, fourth representations of the Q first sentences whose score sum is largest and whose length sum is less than the length threshold of the summary.

(2) After obtaining the fourth representations of the Q first sentences, the training device may input the fourth representations of the Q first sentences and the first text into a third to-be-trained model (still another untrained neural network model, namely, a comparison learning model). In this case, the third to-be-trained may first obtain a representation of the first text, and then obtain and output a similarity between the fourth representations of the Q first sentences and the representation of the first text.

It should be noted that the third to-be-trained model may have a plurality of structures, which are separately described below.

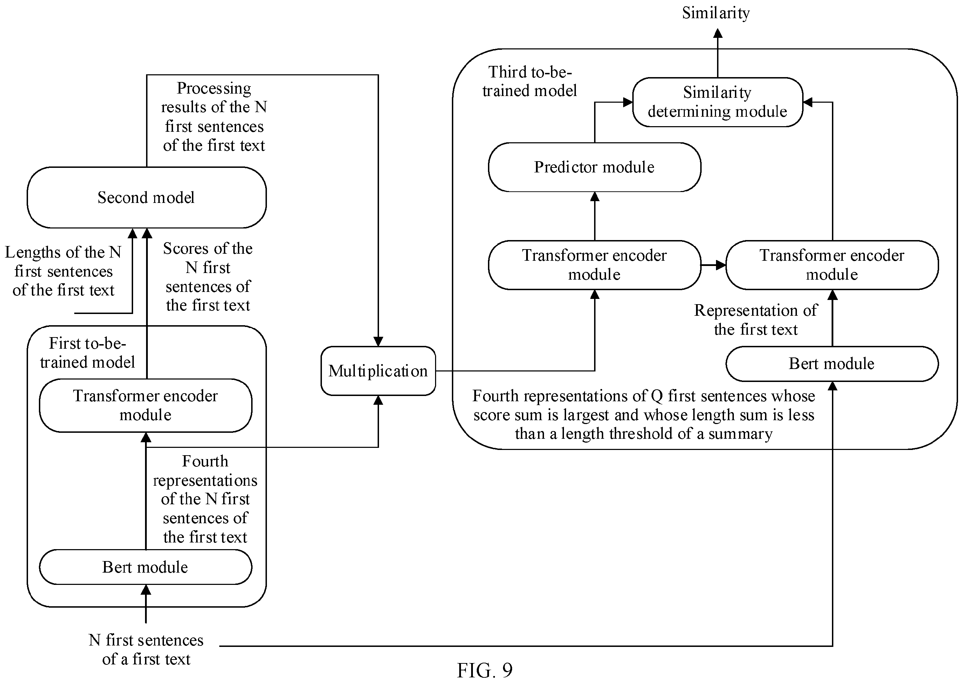

(2.1) As shown in FIG. 9 (FIG. 9 is a diagram of a structure of the third to-be-trained model according to an embodiment of this application), the third to-be-trained model may include a bert module, a first transformer encoder module, a second transformer encoder module, a predictor (predictor) module, and a similarity determining module. The bert module is configured to map the first text to obtain the representation of the first text, and the other modules are configured to perform a series of processing on the fourth representations of the Q first sentences and the representation of the first text, to obtain the similarity between the fourth representations of the Q first sentences and the representation of the first text.

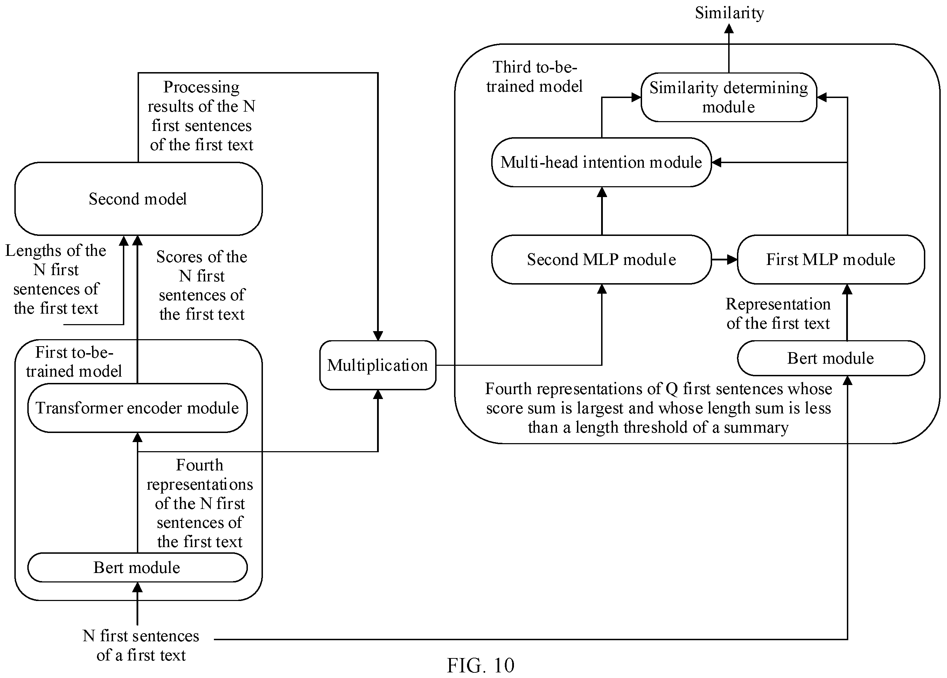

(2.2) As shown in FIG. 10 (FIG. 10 is a diagram of another structure of the third to-be-trained model according to an embodiment of this application), the third to-be-trained model may include a bert module, a first multi-layer perceptron (multi-layer perceptron, MLP), a second MLP module, a multi-head attention (multi-head attention) module, and a similarity determining module. The bert module is configured to map the first text to obtain the representation of the first text, and the other modules are configured to perform a series of processing on the fourth representations of the Q first sentences and the representation of the first text, to obtain the similarity between the fourth representations of the Q first sentences and the representation of the first text.

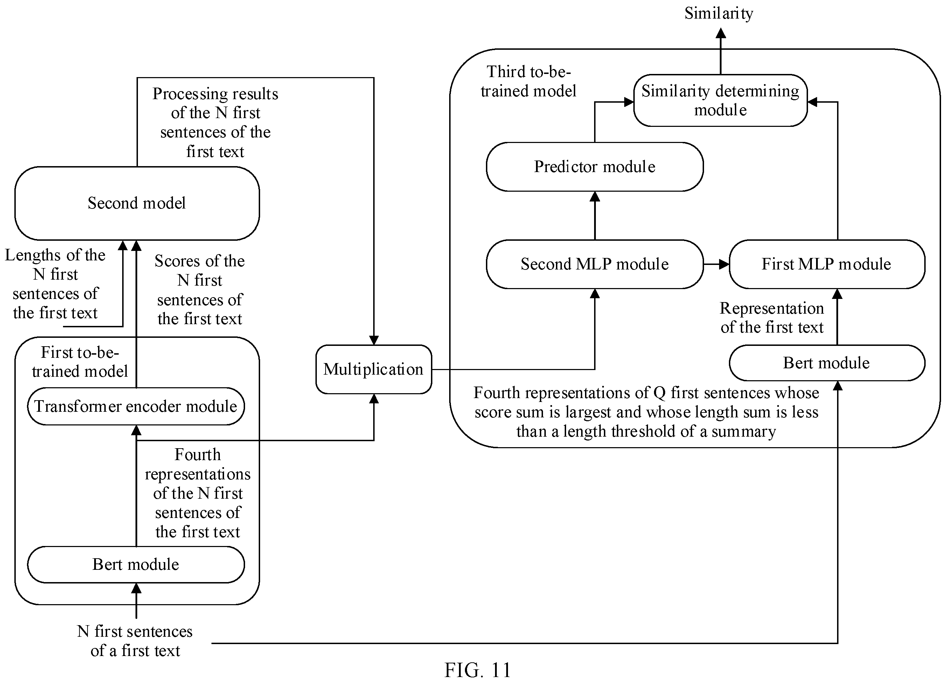

(2.3) As shown in FIG. 11 (FIG. 11 is a diagram of another structure of the third to-be-trained model according to an embodiment of this application), the third to-be-trained model may include a bert module, a first multi-layer perceptron (multi-layer perceptron, MLP), a second MLP module, a predictor module, and a similarity determining module. The bert module is configured to map the first text to obtain the representation of the first text, and the other modules are configured to perform a series of processing on the fourth representations of the Q first sentences and the representation of the first text, to obtain the similarity between the fourth representations of the Q first sentences and the representation of the first text.

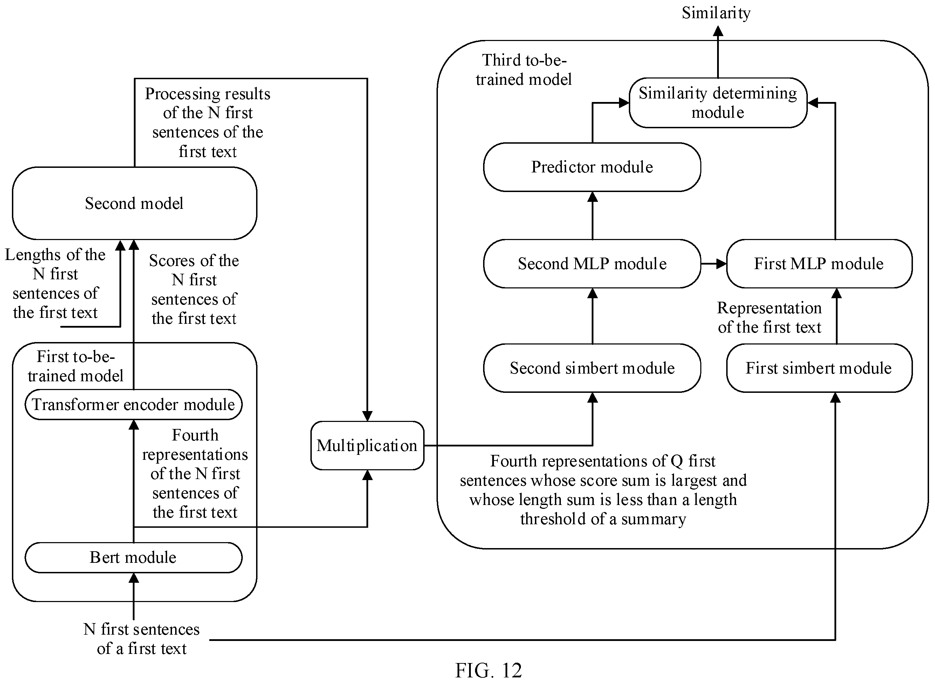

(2.4) As shown in FIG. 12 (FIG. 12 is a diagram of another structure of the third to-be-trained model according to an embodiment of this application), the third to-be-trained model may include a first simbert module, a second simbert module, a first multi-layer perceptron (multi-layer perceptron, MLP), a second MLP module, a predictor module, and a similarity determining module. The first simbert module is configured to map the first text to obtain the representation of the first text, and the other modules are configured to perform a series of processing on the fourth representations of the Q first sentences and the representation of the first text, to obtain the similarity between the fourth representations of the Q first sentences and the representation of the first text.

(3) After obtaining the similarity between the fourth representations of the Q first sentences and the representation of the first text, the training device may update the parameter of the first to-be-trained model and a parameter of the third to-be-trained model based on the similarity, and continue to train, by using another batch of training data in the first training data set, the first to-be-trained model whose parameter is updated and the third to-be-trained model whose parameter is updated, until a model training condition is met (for example, the similarity reaches a maximum value), to obtain the third model and the first model in the embodiment shown in FIG. 4.

In this case, the training device completes end-to-end training of all the models, and deploys, in the foregoing user equipment or the foregoing data processing device, the first model and the second model that are obtained through training. Therefore, the user equipment or the data processing device may implement an automatic summarization service for the user.

The first model obtained through training in this embodiment of this application has an automatic summarization function. Specifically, after the target text including the N sentences is obtained, the N sentences may be scored by using the first model, to obtain the scores of the N sentences. The scores of the N sentences indicate the profits of the N sentences in the target text. Then, the M sentences whose score sum is largest and whose length sum is less than the length threshold may be selected from the N sentences based on the scores of the N sentences and the lengths of the N sentences. Finally, the selected M sentences may be used to form the summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also the total length of the M sentences (namely, the length of the summary of the target text) is considered. Factors considered are comprehensive. Therefore, the summary of the target text including the M sentences is usually a summary with high quality, and can meet a reading requirement of the user, so that user experience is improved.

Further, in this embodiment of this application, the second model may be further obtained through training in a supervised learning manner. The second model has a summary length control function, and may be combined with the foregoing first to-be-trained model, to implement end-to-end training, so as to obtain the first model that is better adapted to a length control algorithm.

Further, in this embodiment of this application, the first model may be obtained through training in an unsupervised learning manner. The first model obtained through training in this manner may have a precise scoring function, and can accurately score each sentence of the target text, to accurately infer the summary of the target text. This further improves user experience.

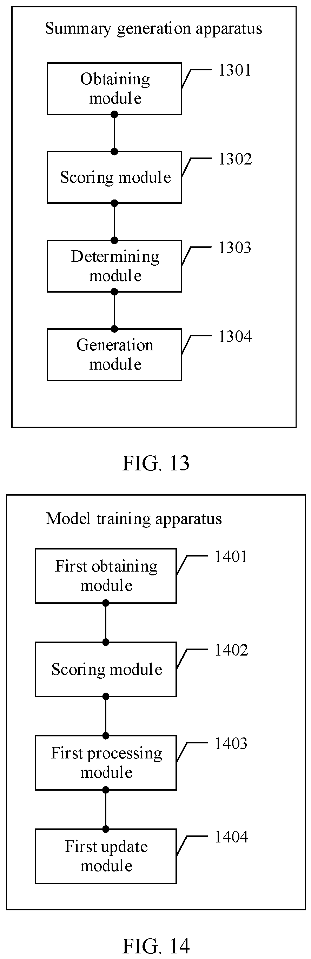

The foregoing describes in detail the model training method provided in embodiments of this application. The following describes the summary generation apparatus and the model training apparatus in embodiments of this application. FIG. 13 is a diagram of a structure of a summary generation apparatus according to an embodiment of this application. As shown in FIG. 13, the apparatus includes:

an obtaining module 1301, configured to obtain a target text, where the target text includes N sentences, and N≥2;
a scoring module 1302, configured to score the N sentences by using a first model, to obtain scores of the N sentences, where the scores of the N sentences indicate profits of the N sentences in the target text;
a determining module 1303, configured to determine, from the N sentences based on the scores of the N sentences and lengths of the N sentences, M sentences whose score sum is largest and whose length sum is less than a length threshold, where N≥M≥1; and
a generation module 1304, configured to generate a summary of the target text based on the M sentences.

In this embodiment of this application, after the target text including the N sentences is obtained, the N sentences may be scored by using the first model, to obtain the scores of the N sentences. The scores of the N sentences indicate the profits of the N sentences in the target text. Then, the M sentences whose score sum is largest and whose length sum is less than the length threshold may be selected from the N sentences based on the scores of the N sentences and the lengths of the N sentences. Finally, the selected M sentences may be used to form the summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

In a possible implementation, the determining module 1303 is configured to compute the scores of the N sentences and the lengths of the N sentences by using an objective algorithm, to determine, from the N sentences, the M sentences whose score sum is largest and whose length sum is less than the length threshold.

In a possible implementation, the objective algorithm is any one of the following: a dynamic programming algorithm, a backtracking method, a branch and bound method, and a greedy algorithm.

In a possible implementation, the determining module 1303 is configured to process the scores of the N sentences and the lengths of the N sentences by using the second model, to obtain processing results of the N sentences. The processing results are used to determine, from the N sentences, the M sentences whose score sum is largest and whose length sum is less than the length threshold.

In a possible implementation, the determining module 1303 is configured to: perform a linear operation on the scores of the N sentences and the lengths of the N sentences by using a second model, to obtain first representations of the N sentences; perform transformer model-based processing on the first representations by using the second model, to obtain second representations of the N sentences; perform a linear operation on the second representations by using the second model, to obtain third representations of the N sentences; and perform a nonlinear operation on the third representations by using the second model, to obtain processing results of the N sentences.

In a possible implementation, the scoring module 1302 is configured to: map the N sentences by using the first model, to obtain fourth representations of the N sentences; and perform transformer model-based processing on the fourth representations by using the first model, to obtain the scores of the N sentences.

In a possible implementation, the target text is input by a user, and the length threshold is set by the user.

FIG. 14 is a diagram of a structure of a model training apparatus according to an embodiment of this application. As shown in FIG. 14, the apparatus includes:

a first obtaining module 1401, configured to obtain a first text, where the first text includes P first sentences, and P≥2;
a scoring module 1402, configured to score P first sentences by using a first to-be-trained model, to obtain scores of the P first sentences, where the scores of the P first sentences indicate profits of the P first sentences in a first text;
a first processing module 1403, configured to process the scores of the P first sentences and lengths of the P first sentences by using a second model, to obtain processing results of the P first sentences, where the processing results of the P first sentences are used to determine, from the P first sentences, Q first sentences whose score sum is largest and whose length sum is less than a length threshold, and P≥Q≥1; and
a first update module 1404, configured to update a parameter of the first to-be-trained model based on the Q first sentences, to obtain a first model.

The first model obtained through training in this embodiment of this application has an automatic summarization function. Specifically, after a target text including N sentences is obtained, the N sentences may be scored by using the first model, to obtain scores of the N sentences. The scores of the N sentences indicate profits of the N sentences in the target text. Then, M sentences whose score sum is largest and whose length sum is less than a length threshold may be selected from the N sentences based on the scores of the N sentences and lengths of the N sentences. Finally, the selected M sentences may be used to form a summary of the target text. In the foregoing process of generating the summary of the target text, after the scores of the N sentences of the target text are determined, the M sentences may be further selected from the N sentences. The score sum of the M sentences is the largest, and the length sum of the M sentences is less than the length threshold of the summary. It can be learned that, when the summary of the target text is generated, not only profits of the M sentences in the target text are considered, but also a total length of the M sentences (namely, a length of the summary of the target text) is considered. Factors considered are comprehensive. Therefore, the summary of the target text including the M sentences is usually a summary with high quality, and can meet a reading requirement of the user, so that user experience is improved.

In a possible implementation, the apparatus further includes: a second obtaining module, configured to obtain a second text, where the second text includes X second sentences, and X≥2; a second processing module, configured to process real scores of the X second sentences and lengths of the X second sentences by using a second to-be-trained model, to obtain processing results of the X second sentences, where the processing results of the X second sentences are used to determine, from the X second sentences, Y second sentences whose score sum is largest and whose length sum is less than the length threshold, and $X \geq Y \geq 1$; a third obtaining module, configured to obtain a target loss based on real processing results of the X second sentences and the processing results of the X second sentences, where the target loss indicates a difference between the real processing results of the X second sentences and the processing results of the X second sentences; and a second update module, configured to update a parameter of the second to-be-trained model based on the target loss until a model training condition is met, to obtain the second model.

In a possible implementation, the first processing module 1403 is configured to: perform a linear operation on the scores of the P first sentences and the lengths of the P first sentences by using the second model, to obtain first representations of the P first sentences; perform transformer model-based processing on the first representations by using the second model, to obtain second representations of the P first sentences; perform a linear operation on the second representations by using the second model, to obtain third representations of the P first sentences; and perform a nonlinear operation on the third representations by using the second model, to obtain the processing results of the P first sentences.

In a possible implementation, the scoring module 1402 is configured to: map the P first sentences by using the first to-be-trained model, to obtain fourth representations of the P first sentences; and perform transformer model-based processing on the fourth representations by using the first to-be-trained model, to obtain the scores of the P first sentences.

In a possible implementation, the first update module 1404 is configured to: obtain a representation of the first text by using a third to-be-trained model; obtain a similarity between the fourth representations of the Q first sentences and the representation of the first text by using the third to-be-trained model; and update the parameter of the first to-be-trained model and a parameter of the third to-be-trained model based on the similarity until a model training condition is met, to respectively obtain the first model and the third model.

It should be noted that, content such as information exchange between the modules/units of the apparatuses and an execution process is based on the same concept as the method embodiments of this application, and produces the same technical effect as those of the method embodiments of this application. For specific content, refer to the foregoing descriptions in the method embodiments shown in embodiments of this application. Details are not described herein again.

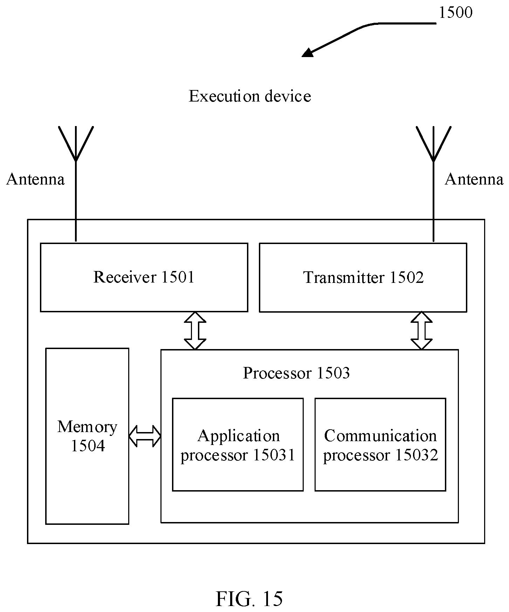

An embodiment of this application further relates to an execution device. FIG. 15 is a diagram of a structure of an execution device according to an embodiment of this application. As shown in FIG. 15, an execution device 1500 may be specifically represented as a mobile phone, a tablet computer, a notebook computer, an intelligent wearable device, a server, or the like. This is not limited herein. The summary generation apparatus described in the embodiment corresponding to FIG. 13 may be deployed on the execution device 1500, and is configured to implement a summary generation function in the embodiment corresponding to FIG. 4. Specifically, the execution device 1500 includes a receiver 1501, a transmitter 1502, a processor 1503, and a memory 1504 (there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a non-volatile random access memory (non-volatile random access memory, NVRAM). The memory 1504 stores a processor and operation instructions, an executable module or a data structure, a subnet thereof, or an extended set thereof. The operation instructions may include various operation instructions to implement various operations.

The processor 1503 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiment of this application may be applied to the processor 1503, or implemented by the processor 1503. The processor 1503 may be an integrated circuit chip, and has a signal processing capability. In an implementation process, steps in the foregoing methods may be implemented by using a hardware integrated logical circuit in the processor 1503, or by using instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1503 may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504, and completes the steps in the foregoing methods in combination with hardware of the processor.

The receiver 1501 may be configured to receive input digital or character information, and generate a signal input related to a related setting and function control of the execution device. The transmitter 1502 may be configured to output digital or character information through a first interface. The transmitter 1502 may be further configured to send instructions to a disk group through the first interface, to modify data in the disk group. The transmitter 1502 may further include a display device such as a display.

In this embodiment of this application, in one case, the processor 1503 is configured to generate a summary of a target text by using the first model and the second model (or the objective algorithm) in the embodiment corresponding to FIG. 4.

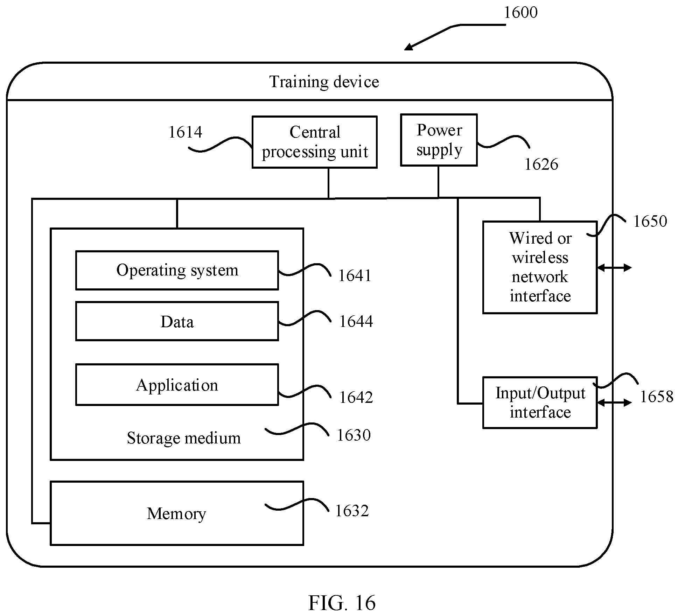

An embodiment of this application further relates to a training device. FIG. 16 is a diagram of a structure of a training device according to an embodiment of this application. As shown in FIG. 16, a training device 1600 is implemented by one or more servers. The training device 1600 may greatly differ due to different configurations or performance, and may include one or more central processing units (central processing units, CPUs) 1614 (for example, one or more processors), a memory 1632, one or more storage media 1630 (for example, one or more mass storage devices) that store an application 1642 or data 1644. The memory 1632 and the storage medium 1630 may be transient storage or persistent storage. A program stored in the storage medium 1630 may include one or more modules (not shown in the figure), and each module may include a series of instruction operations performed on the training device. Further, the central processing unit 1614 may be configured to: communicate with the storage medium 1630, and perform the series of instruction operations in the storage medium 1630 on the training device 1600.

The training device 1600 may further include one or more power supplies 1626, one or more wired or wireless network interfaces 1650, one or more input/output interfaces 1658, and/or one or more operating systems 1641, for example, Windows ServerTM, Mac OS XTM, UnixTM, LinuxTM, and FreeBSDTM.

Specifically, the training device may perform the model training method in the embodiment corresponding to FIG. 8.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a cache. The storage unit may alternatively be a storage unit that is in a wireless access device and that is outside the chip, for example, a read-only memory (read-only memory, ROM) or another type of static storage device that can store static information and instructions, or a random access memory (random access memory, RAM).

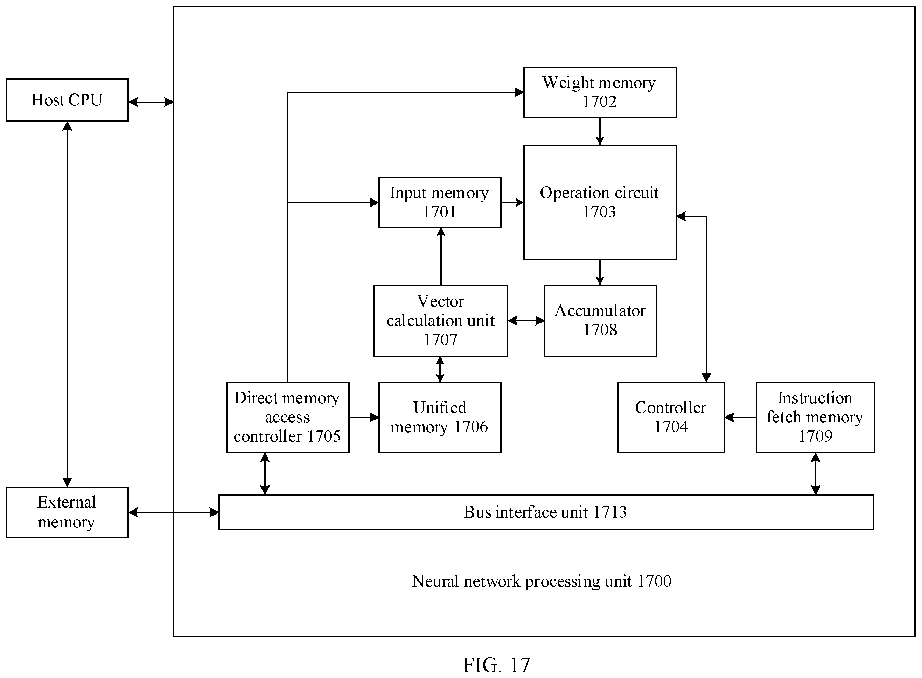

Specifically, FIG. 17 is a diagram of a structure of a chip according to an embodiment of this application. The chip may be represented as a neural network processing unit NPU 1700. The NPU 1700 is mounted to a host CPU (Host CPU) as a coprocessor, and the host CPU assigns a task. A core part of the NPU is an operation circuit 1703. A controller 1704 controls the operation circuit 1703 to extract matrix data in a memory and performs a multiplication operation.

In some implementations, the operation circuit 1703 includes a plurality of processing units (Process Engine, PE) inside. In some implementations, the operation circuit 1703 is a two-dimensional systolic array. The operation circuit 1703 may alternatively be a one-dimensional systolic array or another electronic circuit capable of performing mathematical operations such as multiplication and addition. In some implementations, the operation circuit 1703 is a general-purpose matrix processor.

For example, it is assumed that there is an input matrix A, a weight matrix B, and an output matrix C. The operation circuit fetches data corresponding to the matrix B from a weight memory 1702, and caches the data on each PE in the operation circuit. The operation circuit fetches data of the matrix A from an input memory 1701, performs a matrix operation with the matrix B, to obtain a partial result or a final result of a matrix, and stores the result in an accumulator (accumulator) 1708.

A unified memory 1706 is configured to store input data and output data. Weight data is directly transferred to the weight memory 1702 through a storage unit access controller (Direct Memory Access Controller, DMAC) 1705. The input data is also transferred to the unified memory 1706 through the DMAC.

A BIU is a bus interface unit, namely, a bus interface unit 1713, and is configured to perform interaction between an AXI bus, and the DMAC and an instruction fetch buffer (Instruction Fetch Buffer, IFB) 1709.

The bus interface unit (Bus Interface Unit, BIU for short) 1713 is used by the instruction fetch buffer 1709 to obtain instructions from an external memory, and is further used by the storage unit access controller 1705 to obtain original data of the input matrix A or the weight matrix B from the external memory.

The DMAC is mainly configured to: transfer input data in the external memory DDR to the unified memory 1706, transfer weight data to the weight memory 1702, or transfer input data to the input memory 1701.

A vector computation unit 1707 includes a plurality of operation processing units, and when necessary, performs further processing on an output of the operation circuit 1703, for example, vector multiplication, vector addition, exponential operation, logarithm operation, and size comparison. The vector computation unit 1707 is mainly configured to perform network computation at a non-convolutional/fully-connected layer of a neural network, for example, batch normalization (batch normalization), pixel-level summation, and upsampling of a predicted label plane.

In some implementations, the vector computation unit 1707 can store a processed output vector in the unified memory 1706. For example, the vector computation unit 1707 may apply a linear function or a nonlinear function to the output of the operation circuit 1703, for example, perform linear interpolation on a predicted label plane extracted from a convolutional layer, and for another example, obtain a vector of an accumulated value to generate an activation value. In some implementations, the vector computation unit 1707 generates a normalized value, a pixel-level sum value, or both. In some implementations, the processed output vector can be used as an activation input to the operation circuit 1703, for example, the processed output vector can be used at a subsequent layer of the neural network.

The instruction fetch buffer (instruction fetch buffer) 1709 connected to the controller 1704 is configured to store instructions used by the controller 1704.

The unified memory 1706, the input memory 1701, the weight memory 1702, and the instruction fetch buffer 1709 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of embodiments may be implemented in a form of computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A summary generation method, wherein the method comprises:

   obtaining a target text, wherein the target text comprises N sentences, and $N \geq 2$;
   scoring the N sentences by using a first model, to obtain scores of the N sentences, wherein the scores of the N sentences indicate profits of the N sentences in the target text;
   determining, from the N sentences based on the scores of the N sentences and lengths of the N sentences, M sentences whose score sum is largest and whose length sum is less than a length threshold, wherein $N \geq M \geq 1$; and
   generating a summary of the target text based on the M sentences.

2. The method according to claim 1, wherein the determining, from the N sentences based on the scores of the N sentences and lengths of the N sentences, M sentences whose score sum is largest and whose length sum is less than a summary length comprises:
   computing the scores of the N sentences and the lengths of the N sentences by using an objective algorithm, to determine, from the N sentences, the M sentences whose score sum is largest and whose length sum is less than the length threshold.

3. The method according to claim 2, wherein the objective algorithm is any one of the following: a dynamic programming algorithm, a backtracking method, a branch and bound method, and a greedy algorithm.

4. The method according to claim 1, wherein the determining, from the N sentences based on the scores of the N sentences and lengths of the N sentences, M sentences whose score sum is largest and whose length sum is less than a summary length comprises:
   processing the scores of the N sentences and the lengths of the N sentences by using a second model, to obtain processing results of the N sentences, wherein the processing results are used to determine, from the N sentences, the M sentences whose score sum is largest and whose length sum is less than the length threshold.

5. The method according to claim 4, wherein the processing the scores of the N sentences and the lengths of the N sentences by using a second model, to obtain processing results of the N sentences comprises:

   performing a linear operation on the scores of the N sentences and the lengths of the N sentences by using the second model, to obtain first representations of the N sentences;
   performing transformer model-based processing on the first representations by using the second model, to obtain second representations of the N sentences;
   performing a linear operation on the second representations by using the second model, to obtain third representations of the N sentences; and
   performing a nonlinear operation on the third representations by using the second model, to obtain the processing results of the N sentences.

6. The method according to any one of claims 1 to 5, wherein the scoring the N sentences by using a first model, to obtain scores of the N sentences comprises:

   mapping the N sentences by using the first model, to obtain fourth representations of the N sentences; and
   performing transformer model-based processing on the fourth representations by using the first model, to obtain the scores of the N sentences.

7. The method according to any one of claims 1 to 6, wherein the target text is input by a user, and the length threshold is set by the user.

8. A model training method, wherein the method comprises:

obtaining a first text, wherein the first text comprises P first sentences, and $P \geq 2$;

scoring the P first sentences by using a first to-be-trained model, to obtain scores of the P first sentences, wherein the scores of the P first sentences indicate profits of the P first sentences in the first text;

processing the scores of the P first sentences and lengths of the P first sentences by using a second model, to obtain processing results of the P first sentences, wherein the processing results of the P first sentences are used to determine, from the P first sentences, Q first sentences whose score sum is largest and whose length sum is less than a length threshold, and $P \geq Q \geq 1$; and

updating a parameter of the first to-be-trained model based on the Q first sentences, to obtain a first model.

9. The method according to claim 8, wherein the method further comprises:

obtaining a second text, wherein the second text comprises X second sentences, and $X \geq 2$;

processing real scores of the X second sentences and lengths of the X second sentences by using a second to-be-trained model, to obtain processing results of the X second sentences, wherein the processing results of the X second sentences are used to determine, from the X second sentences, Y second sentences whose score sum is largest and whose length sum is less than the length threshold, and $X \geq Y \geq 1$;

obtaining a target loss based on real processing results of the X second sentences and the processing results of the X second sentences, wherein the target loss indicates a difference between the real processing results of the X second sentences and the processing results of the X second sentences; and

updating a parameter of the second to-be-trained model based on the target loss until a model training condition is met, to obtain the second model.

10. The method according to claim 8 or 9, wherein the processing the scores of the P first sentences and lengths of the P first sentences by using a second model, to obtain processing results of the P first sentences comprises:

performing a linear operation on the scores of the P first sentences and the lengths of the P first sentences by using the second model, to obtain first representations of the P first sentences;

performing transformer model-based processing on the first representations by using the second model, to obtain second representations of the P first sentences;

performing a linear operation on the second representations by using the second model, to obtain third representations of the P first sentences; and

performing a nonlinear operation on the third representations by using the second model, to obtain the processing results of the P first sentences.

11. The method according to any one of claims 8 to 10, wherein the scoring the P first sentences by using a first to-be-trained model, to obtain scores of the P first sentences comprises:

mapping the P first sentences by using the first to-be-trained model, to obtain fourth representations of the P first sentences; and

performing transformer model-based processing on the fourth representations by using the first to-be-trained model, to obtain the scores of the P first sentences.

12. The method according to claim 11, wherein the updating a parameter of the first to-be-trained model based on the Q first sentences, to obtain a first model comprises:

obtaining a representation of the first text by using a third to-be-trained model;

obtaining a similarity between the fourth representations of the Q first sentences and the representation of the first text by using the third to-be-trained model; and

updating the parameter of the first to-be-trained model and a parameter of the third to-be-trained model based on the similarity until a model training condition is met, to respectively obtain the first model and the third model.

13. A summary generation apparatus, wherein the apparatus comprises:

an obtaining module, configured to obtain a target text, wherein the target text comprises N sentences, and $N \geq 2$;

a scoring module, configured to score the N sentences by using a first model, to obtain scores of the N sentences, wherein the scores of the N sentences indicate profits of the N sentences in the target text;

a determining module, configured to determine, from the N sentences based on the scores of the N sentences and lengths of the N sentences, M sentences whose score sum is largest and whose length sum is less than a length threshold, wherein N≥M≥1; and

a generation module, configured to generate a summary of the target text based on the M sentences.

14. A model training apparatus, wherein the apparatus comprises:

a first obtaining module, configured to obtain a first text, wherein the first text comprises P first sentences, and P≥2;

a scoring module, configured to score the P first sentences by using a first to-be-trained model, to obtain scores of the P first sentences, wherein the scores of the P first sentences indicate profits of the P first sentences in the first text;

a first processing module, configured to process the scores of the P first sentences and lengths of the P first sentences by using a second model, to obtain processing results of the P first sentences, wherein the processing results of the P first sentences are used to determine, from the P first sentences, Q first sentences whose score sum is largest and whose length sum is less than a length threshold, and P≥Q≥1; and

a first update module, configured to update a parameter of the first to-be-trained model based on the Q first sentences, to obtain a first model.

15. A summary generation apparatus, wherein the apparatus comprises a memory and a processor, the memory stores code, the processor is configured to execute the code, and when the code is executed, the summary generation apparatus performs the method according to any one of claims 1 to 12.

16. A computer storage medium, wherein the computer storage medium stores one or more instructions, and when the instructions are executed by one or more computers, the one or more computers are enabled to implement the method according to any one of claims 1 to 12.

17. A computer program product, wherein the computer program product stores instructions, and when the instructions are executed by a computer, the computer is enabled to perform the method according to any one of claims 1 to 12.

FIG. 1

Interaction interface

Target text | Summary of the target text

Memory | Processor | Data training/Machine learning/Deep learning | Searching/ Inference/ Decision-making

Data processing device (server)

13:21

FIG. 2a

FIG. 2b

300

Data storage
system 250

Execution device 210

...

Communication network

Local device
301

Local device
302

Examples

FIG. 2c

EP 4 617 909 A1

```
┌─────────────────────────────┐
│  Data collection device     │
│           160               │
└─────────────────────────────┘
         │
Training sample │
         ▼
      ┌────────────┐                                    100
      │  Database  │────────────────────────►  ┌────────────────────────┐
      │    130     │                           │  Training device 120   │
      └────────────┘                           └────────────────────────┘
                                                          │
                                                          │
                                       ┌──────────────────┼──────────────────────┐
                                       │         Execution │                      │
                                       │         device 110│                      │
  ┌─────────┐  User      ┌──────────┐  │   ┌──────────────▼──────────────┐        │
  │ Client  │  behavior  │   I/O    │  │   │  ┌ ─ ─ ─ ─ ─ ─ ─ ─ ─ ─ ─ ┐  │        │     ┌──────────────┐
  │ device  │──────────► │interface │──┼──►│   Neural network model    │──┼────────┼────►│ Data storage │
  │  140    │            │   112    │  │   │  └ ─ ─ ─ ─ ─ ─ ─ ─ ─ ─ ─ ┘  │        │     │ system 150   │
  │         │◄───────────│          │◄─┼───│   Computation module 111    │        │     └──────────────┘
  └─────────┘            └──────────┘  │   └─────────────────────────────┘        │
      ▲                                └──────────────────────────────────────────┘
```

FIG. 3

Obtain a target text, where the target text includes N sentences, and N≥2 — 401

Score the N sentences by using a first model, to obtain scores of the N sentences, where the scores of the N sentences indicate profits of the N sentences in the target text — 402

Determine, from the N sentences based on the scores of the N sentences and lengths of the N sentences, M sentences whose score sum is largest and whose length sum is less than a length threshold, where N≥M≥1 — 403

Generate a summary of the target text based on the M sentences — 404

FIG. 4

Set a length threshold of a summary to a large value

Zoom out

Interaction

User

User equipment    Zoom in

Set a length threshold of a summary to a small value

FIG. 5

**Scores of the N sentences
of the target text**

First model

Transformer encoder module

**Fourth
representations
of the N
sentences of the
target text**

Bert module

**N sentences of a
target text**

FIG. 6

Processing results of the N
sentences of the target text

↑

**Second model**

Nonlinear module

↑

Third
representations of
the N sentences of
the target text

Second linear module

↑

Second
representations of
the N sentences of
the target text

Transformer encoder module

↑

First
representations of
the N sentences of
the target text

First linear module

↑

Scores and lengths of N
sentences of a target text

FIG. 7

Obtain a first text, where the first text includes P first sentences, and P≥2                     801

Score the P first sentences by using a first to-be-trained model, to obtain scores of the P first sentences, where the scores of the P first sentences indicate profits of the P first sentences in the first text                     802

Process the scores of the P first sentences and lengths of the P first sentences by using a second model, to obtain processing results of the P first sentences, where the processing results of the P first sentences are used to determine, from the P first sentences, Q first sentences whose score sum is largest sum and whose length sum is less than a length threshold, and P≥Q≥1                     803

Update a parameter of the first to-be-trained model based on the Q first sentences, to obtain a first model                     804

FIG. 8

Similarity

Third to-be-trained model

Similarity determining module

Predictor module

Transformer encoder module

Transformer encoder module

Representation of the first text

Bert module

Fourth representations of Q first sentences whose score sum is largest and whose length sum is less than a length threshold of a summary

Processing results of the N first sentences of the first text

Second model

Lengths of the N first sentences of the first text

Scores of the N first sentences of the first text

Multiplication

First to-be-trained model

Transformer encoder module

Fourth representations of the N first sentences of the first text

Bert module

N first sentences of a first text

FIG. 9

EP 4 617 909 A1

Similarity

Third to-be-trained model

Similarity determining module

Multi-head intention module

Processing results of the N first sentences of the first text

Second model

Lengths of the N first sentences of the first text

Scores of the N first sentences of the first text

Second MLP module

First MLP module

Representation of the first text

First to-be-trained model

Transformer encoder module

Multiplication

Bert module

Fourth representations of Q first sentences whose score sum is largest and whose length sum is less than a length threshold of a summary

Fourth representations of the N first sentences of the first text

Bert module

N first sentences of a first text

FIG. 10

EP 4 617 909 A1

Similarity

Third to-be-trained model

Similarity determining module

Predictor module

Processing results of the N first sentences of the first text

Second model

Second MLP module → First MLP module

Lengths of the N first sentences of the first text

Scores of the N first sentences of the first text

Representation of the first text

First to-be-trained model

Transformer encoder module

Multiplication

Bert module

Fourth representations of Q first sentences whose score sum is largest and whose length sum is less than a length threshold of a summary

Fourth representations of the N first sentences of the first text

Bert module

N first sentences of a first text

FIG. 11

FIG. 12

EP 4 617 909 A1

Summary generation apparatus

Obtaining module ⎯ 1301

Scoring module ⎯ 1302

Determining module ⎯ 1303

Generation module ⎯ 1304

FIG. 13

Model training apparatus

First obtaining module ⎯ 1401

Scoring module ⎯ 1402

First processing module ⎯ 1403

First update module ⎯ 1404

FIG. 14

1500

Execution device

Antenna                                    Antenna

| Receiver 1501 | Transmitter 1502 |

Processor 1503

| Memory 1504 | Application processor 15031 | Communication processor 15032 |

FIG. 15

FIG. 16

| | |
|---|---|
| Host CPU | |

Weight memory
1702

Input memory
1701

Operation circuit
1703

Vector
calculation unit
1707

Accumulator
1708

Direct memory
access
controller 1705

Unified
memory 1706

Controller
1704

Instruction
fetch memory
1709

External
memory

Bus interface unit 1713

Neural network processing unit 1700

FIG. 17

# EP 4 617 909 A1

## INTERNATIONAL SEARCH REPORT

International application No.

**PCT/CN2023/134903**

### A. CLASSIFICATION OF SUBJECT MATTER

G06F16/34(2019.01)i

According to International Patent Classification (IPC) or to both national classification and IPC

### B. FIELDS SEARCHED

Minimum documentation searched (classification system followed by classification symbols)

IPC:G06F, G06N

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 摘要, 文摘, 概要, 提取, 生成, 抽取, 确定, 评分, 打分, 得分, 分数, 权重, 文本, 文档, 长度, 字数, 限制, 阈值, 范围, 上限, summary, abstract, digest, synopsis, generate, extract, determine, score, weight, grade, evaluate, text, document, length, word count, number, limit, threshold, range

### C. DOCUMENTS CONSIDERED TO BE RELEVANT

| Category* | Citation of document, with indication, where appropriate, of the relevant passages | Relevant to claim No. |
|---|---|---|
| PX | CN 115795025 A (HUAWEI TECHNOLOGIES CO., LTD.) 14 March 2023 (2023-03-14) claims 1-17 | 1-17 |
| Y | CN 108228541 A (SHENZHEN RAISOUND TECHNOLOGY CO., LTD.) 29 June 2018 (2018-06-29) description, paragraphs 56-163 | 1-4, 6-7, 13, 15-17 |
| Y | CN 111241267 A (IFLYTEK CO., LTD.) 05 June 2020 (2020-06-05) description, paragraphs 24-113 | 1-4, 6-7, 13, 15-17 |
| X | CN 111241267 A (IFLYTEK CO., LTD.) 05 June 2020 (2020-06-05) description, paragraphs 24-113 | 8-9, 11, 14-17 |
| A | JP 2013171330 A (NIPPON TELEGRAPH & TELEPHONE CORP.) 02 September 2013 (2013-09-02) entire document | 1-17 |
| A | CN 108628833 A (BEIJING SANKUAI ONLINE TECHNOLOGY CO., LTD.) 09 October 2018 (2018-10-09) entire document | 1-17 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **30 January 2024** | **04 February 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

44

**INTERNATIONAL SEARCH REPORT**

International application No.

**PCT/CN2023/134903**

| C. | DOCUMENTS CONSIDERED TO BE RELEVANT | |
|---|---|---|
| Category* | Citation of document, with indication, where appropriate, of the relevant passages | Relevant to claim No. |
| A | CN 109657054 A (BEIJING BAIDU NETCOM SCIENCE AND TECHNOLOGY CO., LTD.) 19 April 2019 (2019-04-19) entire document | 1-17 |
| A | CN 114138936 A (PERFECT WORLD HOLDING GROUP CO., LTD.) 04 March 2022 (2022-03-04) entire document | 1-17 |
| A | US 2020134091 A1 (IBM) 30 April 2020 (2020-04-30) entire document | 1-17 |

**INTERNATIONAL SEARCH REPORT**
Information on patent family members

International application No.

**PCT/CN2023/134903**

| Patent document cited in search report | | | Publication date (day/month/year) | Patent family member(s) | | | Publication date (day/month/year) |
|---|---|---|---|---|---|---|---|
| CN | 115795025 | A | 14 March 2023 | None | | | |
| CN | 108228541 | A | 29 June 2018 | CN | 108228541 | B | 03 August 2021 |
| CN | 111241267 | A | 05 June 2020 | CN | 111241267 | B | 06 December 2022 |
| JP | 2013171330 | A | 02 September 2013 | JP | 5604465 | B2 | 08 October 2014 |
| CN | 108628833 | A | 09 October 2018 | WO | 2019214236 | A1 | 14 November 2019 |
| | | | | US | 2021056571 | A1 | 25 February 2021 |
| | | | | CN | 108628833 | B | 22 January 2021 |
| CN | 109657054 | A | 19 April 2019 | CN | 109657054 | B | 02 February 2021 |
| CN | 114138936 | A | 04 March 2022 | None | | | |
| US | 2020134091 | A1 | 30 April 2020 | US | 10831806 | B2 | 10 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211534548